# EUROPEAN PATENT APPLICATION

(11) **EP 4 621 937 A1**
(43) Date of publication of application: **24.09.2025**
(21) Application number: 24164907.8
(22) Date of filing: 20.03.2024
(51) Int. Cl.: H01M 10/613, H01M 10/625, H01M 10/6556, H01M 10/6557, H01M 10/6567, H01M 10/6568, H01M 50/204, H01M 50/227, H01M 50/244, H01M 50/249, H01M 10/643, H01M 50/213, H01M 50/278, H01M 50/293

(54) **BATTERY MODULE**

(71) Applicant: Koenigsegg Automotive AB, 262 74 Ängelholm (SE)
(72) Inventor: VON KOENIGSEGG, Christian, 266 54 VEJBYSTRAND (SE); POTT, Victor, 212 15 MALMÖ (SE)
(74) Representative: Brann AB

(57) **Abstract**

A battery module (10) is proposed that comprises: a top section (14), a middle section (16), a bottom section (18), a top contact seam (20), a bottom contact seam (22), and a plurality of battery cells (24). The top contact seam (20) attaches the top section (14) to the middle section (16), and the bottom contact seam (22) attaches the bottom section (18) to the middle section (16). The middle section (16) supports, or holds, the plurality of battery cells (24), and the top section (14), the middle section (16), and the bottom section (18) jointly enclose the battery cells (24).

## Description

### TECHNICAL FIELD

The proposed technology relates to battery modules and to methods of manufacturing battery modules.

### BACKGROUND

Battery modules are commonly used in electrically powered vehicles, such as hybrid or fully electric cars, aircraft, or boats. Several battery modules are commonly coupled together to form a battery pack that powers the vehicle. It is an object of the proposed technology to provide a battery module that has a high capacity and is lightweight and compact. It is also an object to provide a battery module that has a high structural strength, for example to withstand damage in an accident. It is also an object to provide a battery module with an efficient and safe thermal regulation.

### SUMMARY

According to a first aspect of the proposed technology, a casing, or housing, for a battery module, or for a plurality of battery cells, comprises: a top section, a middle section, and a bottom section, wherein the middle section is arranged to support, or hold, a plurality of battery cells, and the top section, the middle section, and the bottom section jointly enclose the battery cells. Preferably, the casing may further comprises: a top contact seam, and a bottom contact seam, wherein the top contact seam attaches the top section to the middle section, and the bottom contact seam attaches the bottom section to the middle section. It is understood that each of the top section and the bottom section is in a mounting position relative to the middle section. It is understood that the middle section may be arranged to be in direct contact with each battery cell.

According to second aspect of the proposed technology, a battery module comprises: a top section, a middle section, a bottom section, and a plurality of battery cells, wherein the middle section supports, or holds, the plurality of battery cells, and the top section, the middle section, and the bottom section jointly enclose the battery cells. Preferably, the battery module may further comprises: a top contact seam, and a bottom contact seam, wherein the top contact seam attaches the top section to the middle section, and the bottom contact seam attaches the bottom section to the middle section.

It is understood that the top section, middle section, bottom section, top contact seam, bottom contact seam jointly forms a casing, or housing, of the battery module, or for the plurality of battery cells. Worded differently, the battery module comprises: a casing, or housing, according to the first aspect of the proposed technology, and a plurality of battery cells, wherein the middle section of the casing supports, or holds, the plurality of battery cells. The battery module of the second aspect of the proposed technology may comprise any of the features of the first aspect of the proposed technology. It is understood that each of the top section and the bottom section is in a mounting position relative to the middle section. It is further understood that the middle section may be in direct contact with each battery cell.

According to a third aspect of the proposed technology, a method for manufacturing a battery module comprises: forming a top section; forming a middle section separate from the top section, wherein the middle section is arranged to support, or hold, a plurality of battery cells; and forming a bottom section separate from the top section and the middle section; wherein each of the top section and the bottom section has a mounting position relative to the middle section in which the top section, middle section, and the bottom section are arranged to jointly enclose the battery cells. The method further comprises: arranging a plurality of battery cells in the middle section with the middle section supporting the battery cells, applying a top contact-seam precursor to the top section and/or the middle section, arranging the top section in its mounting position, and hardening, or curing, the top contact-seam precursor to form a top contact seam that attaches the top section to the middle section; and applying a bottom contact-seam precursor to the bottom section and/or the middle section, arranging the bottom section in its mounting position, and hardening, or curing, the bottom contact-seam precursor to form a bottom contact seam that attaches the bottom section to the middle section.

The battery module manufactured by the third aspect of the proposed technology may comprise any of the features of the first and second aspects of the proposed technology. It is understood that the top contact-seam precursor and bottom contact-seam precursor may be liquid. It is further understood that the top section, middle section, bottom section, top contact seam, bottom contact seam jointly forms a casing, or housing, of the battery module, or for the plurality of battery cells. It is understood that the forming of the top section, middle section, and bottom section can be performed in any order or simultaneously.

According to a fourth aspect of the proposed technology, a battery pack comprises a plurality of operationally connected battery modules according to the second aspect of the proposed technology.

According to a fifth aspect of the proposed technology, an electrically powered vehicle, such as a fully electric vehicle or a hybrid electric vehicle, comprises a battery module according to the second aspect of the proposed technology, or a battery pack according to the fourth aspect of the proposed technology. For example, the vehicle may be a car, an aircraft, or a boat.

Each of the top section, middle section, and bottom section, may be a monolithic structure, or unitary structure. The top section, middle section, bottom section, top contact seam, and bottom contact seam may jointly form a monolithic structure, or unitary structure. A monolithic structure is here understood to have no separable parts or elements. For example, it is not assembled using any form of mechanical fasteners, such as screws and bolts.

In the third aspect of the proposed technology, forming the top section may comprise: forming the top section as a monolithic structure, or unitary structure. Forming the middle section may comprise: forming the middle section as a monolithic structure, or unitary structure. Forming the bottom section may comprise: forming the bottom section as a monolithic structure, or unitary structure. Subsequent to hardening the top contact-seam precursor and the bottom contact-seam precursor, the top section, middle section, bottom section, top contact seam, and bottom contact seam may jointly form a monolithic structure, or unitary structure.

Each of the top section, middle section, bottom section, top contact seam, and bottom contact seam may be of a hardened, or cured, polymer material, preferably a photopolymer material. The top section, middle section, bottom section, top contact seam, and bottom contact seam may be of the same hardened polymer material. Alternatively, the top section, middle section, bottom section, top contact seam, and bottom contact seam may comprise the same hardened polymer material, and the top contact seam and the bottom contact seam may further comprise an additative, such as a thickening agent. Worded differently, the top section, middle section, and the bottom section may be formed from a precursor photopolymer material, and the top contact seam and bottom contact seam may be formed from the same precursor photopolymer material and an additive, such as a thickening agent. Worded differently, the top section, middle section, and the bottom section may be formed from a precursor photopolymer material, and the top contact-seam precursor and bottom contact-seam precursor may comprise the precursor photopolymer material and an additive, such as a thickening agent. It is understood that the additive is not present in the precursor photopolymer material. Worded differently, the top section, middle section, and the bottom section may be formed from a precursor photopolymer material, and the top contact-seam precursor and bottom contact-seam precursor may comprise the precursor photopolymer material and have a viscosity that is higher than the precursor photopolymer material. The features described here contributes to an easier application of the top contact-seam precursor and bottom contact-seam precursor.

The polymer material of the top contact seam may form polymer cross-links with the polymer material of the middle section and with the polymer material of the top section. Similarly, the polymer material of the bottom contact seam may form polymer cross-links with the photopolymer material of the middle section and with the polymer material of the bottom section.

Each of the top section, middle section, and bottom section may be manufactured by 3D-printing or additive manufacturing. Worded differently, each of the top section, middle section, and bottom section may be formed from, or composed of, fused layers.

In the third aspect of the proposed technology, forming the top section may comprise: forming the top section by 3D-printing, or additive manufacturing. Forming the middle section may comprise: forming the middle section by 3D-printing or additive manufacturing. Forming the bottom section may comprise: forming the bottom section by 3D-printing or additive manufacturing.

It is specified that each of the top section, middle section, bottom section, top contact seam, and bottom contact seam may be of a hardened, or cured, photopolymer material. For example, the precursor photopolymer material may comprise, or be, Phrozen TR300^{™}, LOCTITE 3D 3955^{™}, BASF Ultracur3D^{®} ST 45B, or Siraya Tech Fast^{™}.

In the method of the third aspect of the proposed technology, the 3D-printing, or additive manufacturing, may be stereolithography. Worded differently, forming the top section may comprise: forming the top section by stereolithography from a precursor photopolymer material, or photopolymer resin. Forming the middle section may comprise: forming the middle section by stereolithography from a precursor photopolymer material, or photopolymer resin. Forming the bottom section may comprise: forming the bottom section by stereolithography from a precursor photopolymer material, or photopolymer resin. The precursor photopolymer material may be the same for the different sections. In the stereolithography, it is understood that the precursor photopolymer material is hardened, or cured, by subjecting it, or exposing it, to light, or to a curing light. The light may have spectral properties optimized for hardening, or curing, the precursor photopolymer material.

A precursor photopolymer material, or photopolymer resin, is understood to encompass polymers that form cross-links when exposed to light, for example in the ultraviolet (UV) or visible region of the electromagnetic spectrum, and that this causes the photopolymer resin to harden. Stereolithography, which is commonly abbreviated SLA or SL, is understood as a form of 3D-printing, or additive manufacturing. In its most common form, a UV laser is focused on a vat holding a photopolymer resin. With the help of Computer-Aided Manufacturing (CAM) software, or Computer-Aided Design (CAD) software, the UV laser forms hardened layers, typically at the surface or bottom of the vat. Typically, the layers are formed one at the time and the formed layers are shifted before the next layer is formed. This process is continued until the desired 3D object is complete.

The top contact-seam precursor may be of a precursor photopolymer material, and hardening the top contact-seam precursor may comprise: subjecting, or exposing, the top contact-seam precursor to light, or to a curing light, for example by using a lamp emitting light with spectral properties intended for curing. Similarly, the bottom contact-seam precursor may be of a precursor photopolymer material, and hardening the bottom contact-seam precursor may comprise: subjecting, or exposing, the bottom contact-seam precursor to light, or to a curing light, for example by using a lamp emitting light with spectral properties intended for curing. The precursor photopolymer material may be the same as for the top section, middle section, and the bottom section.

The hardening of the top contact-seam precursor may be performed prior to applying the bottom contact-seam precursor. Alternatively, the hardening of the top contact-seam precursor may be performed after applying the bottom contact-seam precursor. The hardening of the top contact-seam precursor and the hardening of the bottom contact-seam precursor may be performed simultaneously.

After forming the top section, middle section, and bottom section, the photopolymer material of the top section, middle section, and bottom section may be semi-cured, or in a semi-cured state. It is understood that the semi-cured photopolymer material has not obtained its full structural strength and that all potential polymer cross-links within the photopolymer material has not yet been formed. It is further understood that the semi-cured photopolymer material and/or the cured photopolymer material, at least to some degree, may be transparent, or translucent, to light that can further harden, or cure, the photopolymer material.

When applying the top contact-seam precursor, the photopolymer material of the top section and the middle section may be semi-cured. Similarly, when applying the bottom contact-seam precursor, the photopolymer material of the bottom section and the middle section may be semi-cured. This contributes to the formation of polymer cross-links between the photopolymer material of the top contact seam and the photopolymer materials of the top section and the middle section, and between the photopolymer material of the bottom contact seam and the photopolymer materials of the bottom section and the middle section.

After forming the top contact seam and the bottom contact seam, the photopolymer material of the top contact seam and the bottom contact seam may be semi-cured, or in a semi-cured state. Subsequent to hardening the top contact-seam precursor and the hardening the bottom contact-seam precursor, or subsequent to subjecting the top contact-seam precursor and the bottom contact-seam precursor to light, or to a curing light, the method of the third aspect may comprise: post-hardening, or post-curing, the casing, or the top section, middle section, bottom section, top contact seam, and bottom contact seam. The post-hardening may comprise: subjecting, or exposing, the casing, or the top section, middle section, bottom section, top contact seam, and bottom contact seam, to light, or to a curing light, for example by using a lamp emitting light with spectral properties intended for curing. Additionally or alternatively, the post-hardening may comprise: subjecting, or exposing, the casing, or the top section, middle section, bottom section, top contact seam, and bottom contact seam, to heat, for example by using an oven.

The hardening of the top contact-seam precursor and the bottom contact-seam precursor and the post-hardening may be performed in a single continuous process step. Alternatively, the hardening of the top contact-seam precursor, the hardening of the the bottom contact-seam precursor, and the post-hardening may be performed in different process step.

The casing may have a first side, second side, third side, fourth side, top side, and a bottom side. The middle section may define, or form, a first side, or first wall, and an opposite second side, or second wall, of the casing. In other words, the middle section has a first side and an opposite second side. It is understood that the first side face in a first direction and the second side face in a second direction that is opposite to the first direction. The middle section may define, or form, a third side, or third wall and an opposite fourth side, or fourth wall, of the casing. In other words, the middle section has a third side and an opposite fourth side. The third side and the fourth side extend between the first side and the second side. It is understood that the third side face in a third direction and the fourth side face in a fourth direction that is opposite to the third direction, and that the third direction and fourth direction are transverse to the first direction and second direction. The top section may define, or form, a top side, or top wall, of the casing and the bottom section may define, or form, an opposite bottom side, or bottom wall, of the casing. It is understood that the top side face in a fifth direction, or top direction, and the bottom side face in a sixth direction, or bottom direction, that is opposite to the fifth direction, and that the fifth direction and sixth direction are transverse to the first direction, second direction, third direction, and fourth direction. Worded differently, the middle section, top section, and bottom section may jointly define, or outline, a rectangular cuboid.

The top contact seam, or top contact-seam precursor, may be annular. It may connect the top section to the middle section at the first side, second side, third side, and fourth side of the casing. The top contact seam may seal the top section to the middle section. This means that the top contact seam as such is arranged to prevent any fluid from passing between the top section and the middle section. Similarly, the bottom contact seam, or bottom contact-seam precursor, may be annular. It may connect the bottom section to the middle section at the first side, second side, third side, and fourth side of the casing. The bottom contact seam may seal the bottom section to the middle section. This means that the bottom contact seam as such is arranged to prevent any fluid from passing between the bottom section and the middle section.

The middle section may have, or form, a top ridge and the top section may have, or form, a top groove, wherein the top ridge is positioned in the top groove. Alternatively, the top section may have, or form, a top ridge and the middle section may have, or form, a top groove, wherein the top ridge is positioned in the top groove. It is understood that the top ridge and the top groove may be annular. The top contact seam then connects the top section to the middle section within the top groove. Worded differently, the top contact seam may be located in the top groove. Worded differently, the top contact seam may connect the top groove of the middle section to the top ridge of the top section.

Similarly, the middle section may have, or form, a bottom ridge and the bottom section may have, or form, a bottom groove, wherein the bottom ridge is positioned in the bottom groove. Alternatively, the bottom section may have, or form, a bottom ridge and the middle section may have, or form, a bottom groove, wherein the bottom ridge is positioned in the bottom groove. It is understood that the bottom ridge and the bottom groove may be annular. The bottom contact seam then connects the bottom section to the middle section within the bottom groove. Worded differently, the bottom contact seam may be located in the bottom groove. Worded differently, the bottom contact seam may connect the bottom groove of the middle section to the bottom ridge of the bottom section.

The top contact seam, or the top groove and the top ridge, may be located at the first side, second side, third side, fourth side, and top side of the casing. Similarly, bottom contact seam, or the bottom groove and the bottom ridge, may be located at the first side, second side, third side, fourth side, and bottom side of the casing.

The middle section and/or the top section may have, or form, a plurality of top spacers, or top protrusions, within the top groove, wherein the top spacers are arranged to space the top ridge apart from the top groove. For example, the top spacers may protrude from the top groove towards the top ridge, and/or the top spacers may protrude from the top ridge towards the top groove. The top spacers may extend through the top contact seam. Similarly, the middle section and/or the bottom section may have, or form, a plurality of bottom spacers, or bottom protrusions, within the bottom groove, wherein the bottom spacers are arranged to space the bottom ridge apart from the bottom groove. For example, the bottom spacers may protrude from the bottom groove towards the bottom ridge, and/or the bottom spacers may protrude from the bottom ridge towards the bottom groove. The bottom spacers may extend through the bottom contact seam. The top spacers and the bottom spacers contribute to an even distribution of the top contact seam respective the bottom contact seam, which in extension contributes to an improved structural strength of the casing.

Each battery cell may be cylindrical. Worded differently, each battery cell may have, or outline, a circular-cylindrical geometry. Each battery cell may have a top end and a bottom end. Worded differently, each battery cell may have a top end section, a midsection, and a bottom end section. It is understood that these sections are connected with the midsection positioned between the top end section and the bottom end section to jointly form the battery cell. Each battery cell may have a top electric terminal, or top electrode, at the top end and a bottom electrical terminal, or bottom electrode, at the bottom end. Worded differently, each battery cell may have a top electric terminal, or top pole, on the top end section and a bottom electric terminal, or bottom pole, on the bottom end section. For example, for each battery cell, the top electric terminal may be an anode and the bottom electric terminal may be a cathode, or vice versa.

It is understood that for each battery cell, the top end may be located closer to the top section than to the bottom section. Similarly, the bottom end may be located closer to the bottom section than to the top section.

The battery cells may be elongated and aligned with the first side, second side, third side, and fourth side of the casing. Worded differently, the battery cells may be elongated and transverse to the top side and the bottom side of the casing.

Each battery cell may be rechargeable. The battery cells may be identical, or of the same type. For example, the battery cells may have the 21700 or 18650 format. The battery cells may be Lithium-Ion battery cells or Nickel-Metal Hydride battery cells.

In the second and third aspects of the proposed technology, the battery cells may be arranged in in a plurality of battery groups. The battery cells in each group may be electrically coupled in parallel. The battery groups may be electrically coupled in in series. The battery groups may have the same number of battery cells.

In the second and third aspects of the proposed technology, the battery module may comprise a plurality of busbars that operationally connect the battery cells. In the third aspect of the proposed technology, the method may comprise: operationally connecting the battery cells with a plurality of busbars. For example, the busbars may be of copper, or a copper alloy. The busbars may be arranged in pairs, and the busbars of each pair may electrically couple the battery cells of a battery group in parallel. For example, a first busbar of the pair may connect to the first electrical terminal of each battery cells of the battery group and a second busbar of the pair may connect to the second electrical terminal of each battery cells of the battery group. Each busbar may electrically couple a pair of battery groups in series. For example, the busbar may connect to the first electric terminal of each battery cell of a first battery group of the pair and to the second electric terminal of each battery cell of a second battery group of the pair. It is understood that the battery groups of the pair may be neighboring. The busbars may be attached to the electric terminals. More specifically, the busbars may be welded to the electric terminals, for example by laser beam welding.

The busbars may comprise, or be composed of, a first set of top busbars that are located at the top section and a second set of bottom busbars that are located at the bottom section.

The battery module may further comprise a first battery-module terminal and a second battery-module terminal that are operationally connected to the battery cells, or the battery groups, and arranged to allow the battery module, the battery cells, or the battery groups, to be connected in an electric circuit, or to an external electric circuit, for example in a battery pack. The first battery-module terminal and the second battery-module terminal may be located at, or accessible at, opposite sides of the casing. For example, the first battery-module terminal may be located at, or accessible at, the first side of the casing and the second battery-module terminal may be located at the second side of the casing. The first battery-module terminal and the second battery-module terminal may be located at, or accessible at, the top side of the housing.

The battery module may further comprise a battery-module control unit arranged to monitor the function, or operational parameters, such as temperature, of the battery cells, or of a subset of the battery cells. The battery-module control unit may be located at the top side of the casing. The battery-module control unit may be attached to the top side of the casing. It is understood that the battery-module control unit may be located outside the casing. The battery module may comprise one or more sensors. It is understood that the sensors may be located inside the casing. Each sensor may contact, or be located at, a battery cell, or at the center between the top end and the bottom end of a battery cell, or at the midsection of a battery cell. For example, the sensors may be temperature sensors. The battery module may further comprise a circuit arrangement that connects the sensors to the battery-module control unit. For example, the circuit arrangement may be a Flexible Printed Circuits (FPC) or Flexible Flat Cable (FFC). The casing, or the top section, may have, or form, an access aperture, and the circuit arrangement may extend through the access aperture. The battery module may have an access seal that seals the circuit arrangement to the casing, or the top section, at the access aperture. Worded differently, the access seal is arranged to prevent a fluid, such as a thermal-regulating liquid, from passing through the aperture, for example between the circuit arrangement and the casing, or top section.

The middle section may have, or form, a battery-cell support, or battery-cell holder, arranged to support the battery cells. In the second aspect of the proposed technology, the middle section may have, or form, a battery-cell support, or battery-cell holder, that supports the battery cells. In the third aspect of the proposed technology, forming the middle section may comprise: forming the middle section with a battery-cell support, or battery-cell holder, arranged to support the battery cells. In the third aspect of the proposed technology, arranging the plurality of battery cells may comprise or encompass: arranging the plurality of battery cells in the battery-cell support with the battery-cell support supporting the battery cells. It is specified above that in the third aspect of the proposed technology, forming the middle section may comprise: forming the middle section as a monolithic structure. It is understood that the battery-cell support may form part of the monolithic structure. Worded differently, forming the middle section may comprise: forming the middle section with a battery-cell support that is arranged to support the battery cells.

It is understood that the battery-cell support supports the battery cells within the casing. More specifically, the battery-cell support may fix, or support, or be arranged to fix, or be arranged to support, each battery cell in an interference fit. This contributes to improve the structural strength of the battery module.

The battery-cell support may be located at a center between, or may be centrally located between, the top side and the bottom side. The battery-cell support may extend parallel with the top side and the bottom side. It is understood that the battery-cell support may outline a planar geometry.

The battery-cell support may be a structure that extends between the first side and the second side of the casing and between the third side and the fourth side of the casing. Worded differently, the battery-cell support may extend from the first side to the second side of the casing, and from the third side to the fourth side of the casing. This contributes to a greater structural strength of the middle section, and in extension of the casing.

The battery-cell support may engage each battery cell at a center between the first electric terminal and the second electric terminal of the battery cell. Worded differently, the battery-cell support may engage the midsection of the battery cell, and the top end section and the bottom end section of the battery cell may extend from the battery-cell support. The top end, or top end section, and the bottom end, or bottom end section, of each battery cell may be located on opposite side of the battery-cell support. Worded differently, the top electric terminal and the bottom electric terminal of each battery support may be located on opposite sides of the battery-cell support.

The battery-cell support may be arranged to position, or divide, the battery cells in parallel rows. In the second and third aspects of the proposed technology, the battery-cell support may position, or divide, the battery cells in parallel rows.

It is specified above that the battery cells may be arranged in in battery groups. Each row of battery cells may correspond to a battery group of the plurality of battery groups.

Worded differently, the battery cells of each battery group may be arranged in a row, and the rows of battery cells forming the battery groups may be parallel. Each row, or battery group, may be aligned with the first side and the second side of the casing, or transverse to the third side and fourth side of the casing.

The battery-cell support may be arranged position the rows in a column. In the second and third aspects of the proposed technology, the rows, or battery groups, may be arranged in a column. It is understood that that the column is transverse to the rows. The column may be transverse to the first side and the second side of the casing, or aligned with the third side and fourth side of the casing.

The battery-cell support may be arranged to position the battery cells in a triangular or hexagonal packing, or a face-centered packing. In the second and third aspects of the proposed technology, the battery-cell support may position the battery cells in a triangular or hexagonal packing, or face-centered packing. Worded differently, the battery cells may be arranged in a triangular or hexagonal packing, or face-centered packing.

More specifically, the battery-cell support may have, or form, a plurality of through holes. Each through hole may be arranged to receive a battery cell of the plurality of battery cells. In the second aspects of the proposed technology, a battery cell is positioned in each through hole. In the third aspect of the proposed technology, forming the middle section may comprise: forming the battery-cell support with a plurality of through holes. Arranging the plurality of battery cells may comprise: inserting the battery cells into the through holes. The through holes may be arranged in a triangular or hexagonal packing, or face-centered packing. Each through hole may fix, or support, or be arranged to fix, or support, a battery cell in an interference fit. In the second and third aspects of the proposed technology, a battery cell of the plurality of battery cells may be positioned in, or extends through, each through hole.

Each through hole may extend transverse to the top side and the bottom side of the casing, or parallel with the first side, second side, third side, and fourth side. Each through hole may have a top opening facing in the top direction, or the same directions as the top side, and a bottom opening facing in the bottom direction, or in the same direction as the bottom side. Worded differently, each through hole may have a top opening and a bottom opening, and the top opening may be located closer to the top section than to the bottom section and the bottom opening may be located closer to bottom section than to the top section. It is understood that the battery cells may extend through the top opening and the bottom opening. It is understood that the top opening may be open to the top conduit and the bottom may be open to the bottom conduit. The top conduit and the bottom conduit are further described below.

It is understood that the above-mentioned triangular or hexagonal packing may be twodimensional, or have a single layer. It is further understood that it may be a close packing. The triangular or hexagonal packing may extend between the first side and the second side of the casing, and between the third side and the fourth side of the casing. Each through hole may extend transverse to the top side and/or bottom side of the casing. It is specified that each battery cell may be cylindrical, and it is further understood that each through hole may outline a matching geometry. Worded differently, each through hole may outline a circular cylindrical geometry.

The battery-cell support, or the through holes, may be arranged to define, or form, a gap between each pair of neighboring battery cells, or to space each pair of neighboring battery cells apart. In the second and third aspects of the proposed technology, the battery-cell support, or the through holes, may define, or form, a gap between each pair of neighboring battery cells, or spaces each pair of neighboring battery cells apart. Worded differently, the battery cells are spaced apart, or arranged to define, or form, a gap between each pair of neighboring battery cells. For example, the gap may be in the range 1 to 3 mm, or 1.5 to 2.5 mm. It is understood that the gap may be arranged to allow a thermal-regulating fluid to pass between the pair of neighboring battery cells. The gap may form part of the conduit that is further described below.

The above features contribute to a dense packing of the battery cells with an efficient thermal regulation of each battery cell.

It is specified that the battery-cell support forms a plurality of through holes. This means that the battery-cell support encircles each battery cell, which contributes to distribute forces on the battery cells evenly at an impact on the casing.

It is specified above that the battery-cell support may fix, or be arranged to fix, each battery cell in an interference fit, and more specifically that each through hole may fix, or be arranged to fix, a battery cell in an interference fit. It is understood that the interference fit may vary with the temperature of the battery-cell support, or more generally of the middle section. The interference fit may be stronger at a lower temperature then at a higher temperature. The battery-cell support, or more generally the middle section, may have a clearance temperature at which the battery-cell support, or the through holes, transitions from fixing each battery cell in an interference fit to define a clearance between the battery-cell support, or through holes, and the battery cells. For example, the clearance temperature may be above 80 °C, above 100 °C, or above 120 °C. The clearance temperature may be above the intended maximum operating temperature of the battery module.

In the third aspect of the proposed technology, the method comprises: arranging the plurality of battery cells in the middle section. This step may encompass: heating the middle section, arranging the plurality of battery cells in the middle section, and cooling the middle section. Subsequent to the cooling, the battery-cell support may fix each battery cell in an interference fit. The heating may be to above the clearance temperature. The cooling may be to below the clearance temperature.

It is specified above that the middle section may be formed from fused layers. The fused layers may have, or form, an uneven surface within each through hole with ridges extending along, or parallel with, the through hole. The ridges may deform, or be arranged to deform, at the arranging of the battery cells in the middle section, or in the batter-cell support, or at the inserting of the battery cells into the through holes. It is understood that this may be with or without the abovementioned heating and cooling. The through holes may extend parallel to the fused layers. This contributes to an easier insertion into the through holes.

It is specified above that the battery module may comprise one or more sensors, and that it may further comprise a circuit arrangement that connects the sensors to the battery-module control unit. One or more through holes may have a sensor cut-out, or sensor indentation, arranged to receive, or house, a sensor. For example, it is specified that the battery cells may be arranged in in a plurality of battery groups, and for the through holes in which a battery group is positioned, a single through hole may have a sensor cut-out. In the second aspect of the proposed technology, one or more of the through holes may have a sensor cut-out, or sensor indentation, and a sensor of the one or more sensors is positioned in each sensor cut-out, or in a sensor cut-out. For example, for the through holes in which a battery group is positioned, a sensor may be positioned in a sensor cutout. It is understood that a sensor cut-out is open towards, or faces, or a battery cell. It is further understood that a sensor cut-out is located within a through hole. In the third aspect of the proposed technology, forming the middle section may comprise: forming the battery-cell support with a plurality of through holes, wherein one or more through holes is formed with a sensor cut-out, or sensor indentation, arranged to receive, or house, a sensor. The method may further comprise: positioning a sensor in each sensor cut-out, or in a sensor cut-out. This may be before or after the arranging of the plurality of battery cells in the middle section.

A top conduit section and a bottom conduit section are described below. Each sensor cut-out, or a sensor cut-out, may extend, or be arranged to extend, from the top conduit section, or from the side of the battery-cell support facing the top section, to the center of the battery-cell support, or to the middle of the through hole. More specifically, it may extend, or be arranged to extend, to the center between the top conduit section and the bottom conduit section. Worded differently, each sensor cut-out, or a sensor cut-out, may position, or be arranged to position, a sensor at a battery cell, at the center between the top end and the bottom end of a battery cell, or at the midsection of a battery cell.

It is specified above that battery module may comprise a circuit arrangement that connects the sensors to the battery-module control unit. The circuit arrangement may comprise one or more sensor connectors, wherein each sensor connector connects to a sensor. For example, the sensor connectors may be electric cables. The sensor connectors may extend from the sensor to, or towards, the top section of the casing. Each sensor cut-out may, or a sensor cut-out, may be arranged to receive, or house, a sensor and a sensor connector that is connected to the sensor. In the second aspect of the proposed technology, a sensor and a sensor connector that is connected to the sensor may be positioned in each sensor cut-out, or in a sensor cut-out. In the third aspect of the proposed technology, the method may further comprise: positioning a sensor and a sensor connector that is connected to the sensor in each sensor cut-out, or in a sensor cut-out. This may be before or after the arranging of the plurality of battery cells in the middle section.

It is specified that the battery-cell support may have, or form, a plurality of through holes. For each through hole, or a through hole, the battery-cell support may have, or form, a wall that surrounds, or outlines, the through hole. It is understood that that the wall surrounding a through hole may partly surround a neighboring through hole. Worded differently, for each pair of, or a pair of, neighboring through holes, the walls of the through holes may jointly have, or form, a wall section between the through holes. Worded differently, the battery-cell support forms a wall section between each pair, or a pair of, neighboring through holes. It is specified above that one or more through holes may have a sensor cut-out. It is understood that the sensor cut-outs may be in, or formed in, the walls of the through holes.

For each through hole, or a through hole, the wall may be arranged to contact, or be flush with, a battery cell received in the through hole. For each pair, or a pair, of neighboring through holes, the wall section between them may be arranged to contact, or be flush with, a battery cell received in respective through hole. In the second aspect of the proposed technology, for each through hole, or a through hole, the wall may contact, or be flush with, the battery cell positioned in the through hole. For each pair, or a pair, of neighboring through holes, the wall section between them may contact, or be flush with, the battery cell positioned in respective through hole.

Alternatively, for each through hole, or a through hole, the wall may be arranged to be spaced apart from, or give a clearance to, a battery cell received in the through hole. For each pair, or a pair, of neighboring through holes, the wall section between them may be arranged to be spaced apart from, or give a clearance to, a battery cell received in respective through hole. In the second aspect of the proposed technology, for each through hole, or a through hole, the wall may be spaced apart from, or have a clearance to, the battery cell positioned in the through hole. For each pair, or a pair, of neighboring through holes, the wall section between them may be spaced apart from, or have a clearance to, the battery cell positioned in respective through hole.

Within each through hole, or a through hole, the battery-cell support may have, or form, a plurality of protrusions, wherein the protrusions are arranged to support a battery cell received in the through hole. In the second aspect of the proposed technology, the protrusions support the battery cell positioned in the through hole. It is understood that for each through hole, the protrusions may be connected to and extend from the wall of the through hole. For each pair of neighboring through holes, the protrusions may be connected to and extend from the wall section between the through holes. It is understood that for each through hole, the protrusions contact, or are arranged to contact, the battery cell in the through hole. It is specified that the battery-cell support may fix, or be arranged to fix, each battery cell in an interference fit. More specifically, for each through hole, or a through hole, the protrusions may be arranged to fix, or arranged to support, a battery cell positioned in the through hole in an interference fit. Worded differently, for each through hole, or a through hole, the wall may bias, or be arranged to bias, the protrusions against the battery cell positioned in the through hole. Worded differently, for each pair, or a pair, of neighboring through holes, the wall section between the through holes may bias, or be arranged to bias, the protrusions against the battery cell positioned in respective through hole.

For each pair of, or a pair of, neighboring through holes, the protrusions of the through holes and the wall section between the through holes may cooperate, or be arranged to cooperate, and flex, or deform, the wall section at a thermal expansion and/or contraction of the battery-cell support. For each pair of, or a pair of, neighboring through holes, the protrusions of the through holes and the wall section between the through holes may cooperate, or be arranged to cooperate, and flex, or deform, the wall section at a positioning of battery cells in the through holes. In the second aspect of the proposed technology, for each pair of, or a pair of, neighboring through holes, the battery cells in the through holes may flex, or deform, the wall section between the through holes. More specifically, for each pair of, or a pair of, neighboring through holes, the battery cells in the through holes may bias, or push against, the protrusions in the through holes and flex, or deform, the wall section between the through holes. It is understood that the flexing, or deformation, may be at, or in the proximity of, the protrusions. The flexing of the wall sections contributes to a stable support of the battery cells that is less sensitive to temperature changes. The flexing may also reduce vibrations between the battery cells and the battery-cell support in use. The flexing is also typically advantageous in combination with a middle section of a photopolymer material, which can be difficult to manufacture with low tolerances, or high precision, in the additive manufacturing.

For each through hole, or a through hole, the protrusions may be located at different positions along the through hole, or relative to top section or bottom section, than the protrusions of a neighboring through hole, or of neighboring through holes. More specifically, for each through hole, or a through hole, the protrusions may be located at two or more separate levels, or planes, that are transverse to the through hole and spaced apart along the through hole. For example, for each through hole, or a through hole, the protrusions may be located at two, three, or four levels, or planes. The levels, or planes, of the protrusions of each through hole, or a through hole, may be non-overlapping with the levels, or planes, of the protrusions of a neighboring through hole, or of neighboring through holes. Worded differently, the separate levels, or planes, of the protrusions of a through hole may be spaced apart from the separate levels, or planes, of the protrusions of a neighboring through hole, or of neighboring through holes, in a direction along the through hole, in the top direction or bottom direction, or towards the top section or the bottom section. For example, the separate levels, or planes, of the through hole may be spaced apart from the levels, or planes, of a neighboring through hole, or of neighboring through holes, by at least 5%, or at least 10%, of the length of the through hole, or by at least 2%, or at least 4%, of the length of the battery cell positioned in the through hole, or more generally of the battery cells. It is understood that for each through hole, or a through hole, there may be one or more protrusion on each level, or plane, for example a single protrusion on each level.

The protrusions may be ridges. The ridges may be oriented tangential to the through holes. The protrusions may be annular or partly annular. Worded differently, the protrusions may outline a complete circle, or a major arc of circle. It is understood that the annular, or partly annular, protrusions may extend tangentially to the through hole. It is specified above that one or more through holes may have a sensor cut-out. For each through hole, or a through hole, that has a sensor cut-out, a partly annular protrusion may terminate at, or have ends located at, the abovementioned sensor cut-out. For each through hole, or a through hole, at least one protrusion may be annular, or outline a complete circle. For each through hole, or a through hole, at least one protrusion may form seal that is arranged to prevent, or inhibit, a thermal-regulating liquid from passing between the battery cell positioned in the through hole and the wall of the through hole, or the battery cell support. More generally, for each through hole, or a through hole, at least one protrusion may form seal that is arranged to cooperate with the battery cell and prevent a thermal-regulating fluid from passing through the through hole. It is understood that for each through hole, or for a through hole, the annular or partly annular protrusions may be located at different positions along the through hole.

It is specified above that each through hole may have a top opening and a bottom opening. For each through hole, or a through hole, at least one protrusion may be located closer to the top opening than to the center between the top opening and the bottom opening, and at least one protrusion may be located closer to the bottom opening than to the center between the top opening and the bottom opening. The positions of the protrusions described above may contribute to the flexing of the wall sections and to a stable support of the battery cells.

It is specified that the battery groups may have the same number of battery cells and the battery cells of each battery group may be arranged in a row. Each battery group, or each row, may extend transversely to, or between, the third side and the fourth side of the casing. The first and last battery cell of every other battery group, or row, may be abreast, or aligned, at the third side and the fourth side of the casing. It is further specified that the battery cells may be arranged in a triangular or hexagonal packing. The battery cells may jointly define, or outline, a first undulating profile, or first corrugated profile, at the third side of the casing, and a second undulating profile, or second corrugated profile, at the fourth side of the casing that is complementary to the first undulating profile. Worded differently, the second undulating profile may have a reversed phase relative to the first undulating profile along the first direction or second direction, or the second undulating profile may be inverted relative to the first undulating profile.

It is explained above that the third side faces a third direction and the fourth side faces a fourth direction that is opposite to the third direction. The third side of the casing may have, or form, a first side profile that matches, conforms to, or is congruent with, the first undulating profile defined by the battery cells, and the fourth side of the casing may have, or form, a second side profile that matches, conforms to, or is congruent with, the second undulating profile defined by the battery cells. It is understood that the first side profile faces in the third direction and that the second side profile faces in the fourth direction. It is further understood that the first side profile may be undulating, or corrugated, and that the second side profile may be undulating, or corrugated. It is further understood that the second side profile may be complementary to, or inverted relative to, the first side profile.

More generally, the third side and the fourth side of the casing may conform to the battery cells, and the fourth side may be complementary to the third side. Here, it is understood that the third side and the fourth side face outwards. This allows for a battery pack with high energy density. For example, in the battery pack of the fourth aspect of the proposed technology, that plurality of battery modules may comprise a first battery module and a second battery module. It is understood that the first battery module and the second battery module may be identical. The first sides and the second sides of the first battery module and the second battery may be abreast, and the fourth side of the second battery module may contact and conform to the third side of the first battery module. This means that the battery cells of the first battery module are positioned close to the battery cells of the second battery module, resulting in an improved energy density of the battery pack.

The casing, or the middle section of the casing, may have, or form, an inlet and an outlet for a thermal-regulating liquid, such as a coolant. In the third aspect of the proposed technology, forming the middle section may comprise: forming the middle section with an inlet and an outlet for a thermal-regulating liquid, such as a coolant. The inlet and the outlet may be located at the same side of the casing, for example at the first side of the casing. The inlet and the outlet may face in the same direction, for example in the same direction as the top side of the casing. The inlet may be the only inlet of the casing for a thermal-regulating liquid. Similarly, the outlet may be the only outlet of the casing for a thermal-regulating liquid.

The casing may have, or form, a conduit, or passage, for the thermal-regulating liquid, wherein the conduit is arranged to lead the thermal-regulating liquid from the inlet to the outlet. In the third aspect of the proposed technology, forming the middle section may comprise: forming the middle section to define, or partly define, a conduit, or passage, for the thermal-regulating liquid, wherein the conduit is arranged to lead the thermal-regulating liquid from the inlet to the outlet. The conduit may further be arranged distribute, or guide, the thermal-regulating liquid to all the battery cells. The abovementioned gaps between neighboring batteries may form part of the conduit. Each battery cell may extend into, or be arranged to extend into, the conduit. This way, the battery cells are arranged to be exposed to the thermal-regulating liquid within the conduit.

The conduit may have, or comprise, a top conduit section, or top passage section, and a bottom conduit section, or bottom passage section. The top conduit section may be arranged distribute the thermal-regulating liquid to, or across, all battery cells. Similarly, the bottom conduit section may be arranged distribute the thermal-regulating liquid to, or across, all battery cells. Each battery cell may extend into, or be arranged to extend into, the top conduit section. This way, the battery cells are arranged to be exposed to the thermal-regulating liquid within the top conduit section. More specifically, the top end or top electric terminal of each battery cell may be located in the top conduit section, or the top end section of each battery cell may be located in the top conduit section. Each battery cell may extend into, or be arranged to extend into, the bottom conduit section. This way, the battery cells are arranged to be exposed to the thermal-regulating liquid within the bottom conduit section. More specifically, the bottom end or bottom electric terminal of each battery cell may be located in the bottom conduit section, or the bottom end section of each battery cell may be located in the bottom conduit section.

The top conduit section may be fluidly coupled to the inlet, or outlet, at one of the sides of the casing and the bottom conduit section may be fluidly coupled to the outlet, or inlet, at the same side of the casing, and the top conduit section may be fluidly coupled to the bottom conduit section at the opposite side of the casing. For example, the top conduit section may be fluidly coupled to the inlet, or outlet, at the first side of the casing, the bottom conduit section may be fluidly coupled to the outlet, or inlet, at first side of the casing, and the top conduit section may be fluidly coupled to the bottom conduit section at the second side of the casing. This contributes to an even heating or cooling of the battery cells.

The top conduit section may extend between the first side and the second side of the casing. The top conduit section may extend between the third side and the fourth side of the casing. Similarly, the bottom conduit section may extend between the first side and the second side of the casing. The bottom conduit section may extend between the third side and the fourth side of the casing.

The top conduit section may be located between, or extend between, the battery-cell support and the top section of the casing. Similarly, the bottom conduit section may be located between, or extend between, the battery-cell support and the bottom section of the casing. Worded differently, the top conduit section may be located between the top section and the middle section, and/or the bottom conduit section may be located between the bottom section and the middle section.

The conduit may be arranged to conduct the thermal-regulating liquid in a top flow direction. The conduit may further be arranged to simultaneously conduct the thermal-regulating liquid in a bottom flow direction that is opposite to the top flow direction. More specifically, the top conduit section may be arranged to conduct the thermal-regulating liquid in a top flow direction, and the bottom conduit section may be arranged to conduct the thermal-regulating liquid in a bottom flow direction that is opposite to the top flow direction. For example, the top flow direction may be from the first side to the second side of the casing, and the bottom flow direction may be from the second side to the first side of the casing. Worded differently, the conduit may be arranged to conduct the thermal-regulating liquid from the first side to the second side of the casing, and from the second side to the first side of the casing. It is understood that the top flow direction and the bottom flow direction are general flow directions, or mean flow directions.

It is specified that the battery-cell support may be arranged to position the battery cells in parallel rows, and that the battery-cell support may be arranged position the rows in a column. The top flow direction may be transverse to the rows, or aligned with the column. Similarly, the bottom flow direction may be transverse to the rows, or aligned with the column. It is further specified that the battery-cell support may be arranged to position the battery cells in a triangular or hexagonal packing. This in combination with positioning in rows means that after passing between neighboring battery cells in a row, the thermal-regulating liquid is split into two flows that passes on either side of the closest battery cell in the downstream row.

It is specified that the top conduit section may be fluidly coupled to the bottom conduit section at the opposite side of the casing from the inlet and the outlet, or at the second side of the casing. The conduit may further have, or comprise, a plurality of channels that extends through the middle section of the casing, or through the battery-cell support, wherein the top conduit section and the bottom conduit section are fluidly coupled via the channels. Worded differently, the channels fluidly couple the top conduit section to the bottom conduit section. It is understood that the channels may be formed by the middle section of the casing, or more specifically by the battery-cell support of the middle section. The channels may be arranged to conduct the thermal-regulating liquid transverse to the top flow direction and/or the bottom flow direction, or transverse to the top side and/or the bottom side of the casing.

It is specified above that the inlet and the outlet may be located at the same side of the casing, for example at the first side of the casing. The plurality of channels may be located at the opposite side of the casing, for example at the second side of the casing. The plurality of channels may form the only fluid connection, or fluid coupling, between the top conduit section and the bottom conduit section.

The battery-cell support may be located between the top conduit section and the bottom conduit section. The battery-cell support may be arranged to cooperate with the battery cells to separate the top conduit section and the bottom conduit section. In the second and third aspects of the proposed technology, the battery-cell support and the battery cells may jointly separate the top conduit section and the bottom conduit section.

More specifically, the battery-cell support may be arranged to cooperate with the battery cells to prevent, or inhibit, the thermal-regulating liquid from passing between the top conduit section and the bottom conduit section between the battery cell support and the battery cells, or at the battery cells. It is specified above that the battery-cell support may be arranged to fix each battery cell in an interference fit. The interference fit may prevent, or inhibit, the thermal-regulating liquid from passing between the top conduit section and the bottom conduit section between the battery-cell support and the battery cells, or at the battery cells. Additionally or alternatively, the casing may comprise a plurality of seals, such as O-rings, wherein each seal is arranged to prevent, or inhibit, the thermal-regulating liquid from passing between the top conduit section and the bottom conduit section between the battery-cell support and a battery cell, or at a battery cell, of the plurality of battery cells.

It is specified above that the conduit may be arranged to conduct the thermal-regulating liquid in a top flow direction, and that the conduit may further be arranged to simultaneously conduct the thermal-regulating liquid in a bottom flow direction that is opposite to the top flow direction. The conduit may have, or comprise, an inlet manifold, or first manifold, wherein the inlet manifold fluidly couples the inlet and the top conduit section, or bottom conduit section. Worded differently, the inlet is fluidly coupled to the top conduit section, or bottom conduit section, via the first manifold. The inlet manifold may be arranged to distribute, or spread, the thermal-regulating liquid transverse to the top flow direction, across the first side of the casing, or between the third side and the fourth side of the casing. The inlet manifold may be arranged to distribute the thermal-regulating liquid at a plurality of dispensing points. The dispensing points may be located at the first side of the casing. The dispensing points may be distributed between the third side and the fourth side of the casing. A dispensing point may be located at the third side of the casing, and another dispensing point may be located at the fourth side of the casing. The inlet manifold may be formed by the middle section of the casing.

Similarly, the conduit may have, or comprise, an outlet manifold, or second manifold, wherein the outlet manifold fluidly couples the outlet and the bottom conduit section, or top conduit section. Worded differently, the outlet is fluidly coupled to the bottom conduit section, or top conduit section, via the outlet manifold. The outlet manifold may be arranged to collect, or gather, the thermal-regulating liquid transverse to the bottom flow direction, across the first side of the casing, or between the third side and the fourth side of the casing. The outlet manifold may be arranged to collect the thermal-regulating liquid at a plurality of collecting points. The collecting points may be located at the first side of the casing. The collecting points may be distributed between the third side and the fourth side of the casing. A collecting point may be located at the third side of the casing, and another collecting point may be located at the fourth side of the casing. The outlet manifold may be formed by the middle section of the casing.

The middle section may have, or form, a top reinforcement structure that is connected to the battery-cell support and extends from the battery-cell support towards the top section. It is specified above that in the third aspect of the proposed technology, forming the middle section may comprise: forming the middle section as a monolithic structure. It is understood that the top reinforcement structure may form part of the monolithic structure. Worded differently, forming the middle section may comprise: forming the middle section with a top reinforcement structure that is connected to the battery-cell support and extends from the battery-cell support towards the top section. The top reinforcement structure may be a partially hollowed-out structure, a truss-like structure, or a scaffolding like structure.

The top reinforcement structure may extend between the first side and the second side of the casing, and between the third side and the fourth side of the casing. The top reinforcement structure may be connected to the first side, second side, third side, and the fourth side of the casing defined by the middle section. It is understood that the top reinforcement structure may extend into, or through, the top conduit section. Worded differently, the top reinforcement structure may be located in the top conduit section. It is further understood that the top reinforcement structure may be arranged to allow the thermal-regulating liquid to pass through the top reinforcement structure, or the top conduit section, with the middle section supporting the plurality of battery cells.

Similarly, the middle section may have, or form, a bottom reinforcement structure that is connected to the battery-cell support and extends from the battery-cell support towards the bottom section. It is specified above that in the third aspect of the proposed technology, forming the middle section may comprise: forming the middle section as a monolithic structure. It is understood that the bottom reinforcement structure may form part of the monolithic structure. Worded differently, forming the middle section may comprise: forming the middle section with a bottom reinforcement structure that is connected to the battery-cell support and extends from the battery-cell support towards the bottom section. The bottom reinforcement structure may be a partially hollowed-out structure, a truss-like structure, or a scaffolding like structure.

The bottom reinforcement structure may extend between the first side and the second side of the casing, and between the third side and the fourth side of the casing. The bottom reinforcement structure may be connected to the first side, second side, third side, and the fourth side of the casing defined by the middle section. It is understood that the bottom reinforcement structure may extend into, or through, the bottom conduit section. Worded differently, the bottom reinforcement structure may be located in the bottom conduit section. It is further understood that the bottom reinforcement structure may be arranged to allow the thermal-regulating liquid to pass through the bottom reinforcement structure, or the bottom conduit section, with the middle section supporting the plurality of battery cells.

The middle section, or the top reinforcement structure may have, or form, a plurality of top connectors, wherein each top connector extends to the top section. The top connectors may extend from the battery-cell support. It is understood that the top connectors may be connected to the battery-cell support. The top connectors may extend transversely to the top side. The battery module, or casing, may comprise: a plurality of additional top contact seams, wherein each additional top contact seam attaches the top section to the middle section, or to a top connector of the plurality of top connectors. It is understood that an additional top contact seam can be spot like or elongated.

It is specified above that in the third aspect of the proposed technology, forming the middle section may comprise: forming the middle section as a monolithic structure. It is understood that the top connectors may form part of the monolithic structure. Worded differently, forming the middle section may comprise: forming the middle section with a plurality of top connectors, wherein each top connector is arranged to extend to the top section. The method may further comprise prior to arranging the top section in its mounting position: applying an additional top contact-seam precursor to each top connectors, wherein the top contact-seam precursors are arranged to contact the top section, or applying a plurality of additional top contact-seam precursors to the top section, wherein each top contact-seam precursor is arranged to contact the a top connector. The method may further comprise subsequent to arranging the top section in its mounting position: hardening, or curing, the additional top contact-seam precursors to have, or form, additional top contact seams that attach the top section to the middle section, or to the top connectors.

Similarly, the middle section, battery-cell support, or the bottom reinforcement structure may have, or form, a plurality of bottom connectors, wherein each bottom connector extends to the bottom section. The bottom connectors may extend from the battery-cell support. It is understood that the bottom connectors may be connected to the battery-cell support. The bottom connectors may extend transversely to the bottom side. The battery module, or casing, may comprise: a plurality of additional bottom contact seams, wherein each additional bottom contact seam attaches the bottom section to the middle section, or to a bottom connector of the plurality of bottom connectors. It is understood that an additional bottom contact seam can be spot like or elongated.

It is specified above that in the third aspect of the proposed technology, forming the middle section may comprise: forming the middle section as a monolithic structure. It is understood that the bottom connectors may form part of the monolithic structure. Worded differently, forming the middle section may comprise: forming the middle section with a plurality of bottom connectors, wherein each bottom connector is arranged to extend to the bottom section. The method may further comprise prior to arranging the bottom section in its mounting position: applying an additional bottom contact-seam precursor to each bottom connectors, wherein the bottom contact-seam precursors are arranged to contact the bottom section, or applying a plurality of additional bottom contact-seam precursors to the bottom section, wherein each bottom contact-seam precursor is arranged to contact the a bottom connector. The method may further comprise subsequent to arranging the bottom section in its mounting position: hardening, or curing, the additional bottom contact-seam precursors to have, or form, additional bottom contact seams that attach the bottom section to the middle section, or to the bottom connectors.

Each of the additional top contact seams may be of a hardened, or cured, polymer material, preferably a photopolymer material. The top contact seam and additional top contact seams may be of the same hardened polymer material. Similarly, each of the additional bottom contact seams may be of a hardened, or cured, polymer material, preferably a photopolymer material. The bottom contact seam and additional bottom contact seams may be of the same hardened polymer material.

The polymer material of the additional top contact seam may form polymer cross-links with the polymer material of the middle section, or top connectors, and with the polymer material of the top section. Similarly, the polymer material of the additional bottom contact seam may form polymer cross-links with the polymer material of the middle section, or bottom connectors, and with the polymer material of the bottom section.

It is specified that the additional top contact seam may be of a hardened, or cured, photopolymer material. The additional top contact-seam precursors may be of a precursor photopolymer material, and hardening the additional top contact-seam precursors may comprise: subjecting, or exposing, the additional top contact-seam precursors to light, or to a curing light. The top contact-seam precursor and the additional top contact-seam precursors may be of the same material. Similarly, it is specified that the additional bottom contact seam may be of a hardened, or cured, photopolymer material. The additional bottom contact-seam precursors may be of a precursor photopolymer material, and hardening the additional bottom contact-seam precursors may comprise: subjecting, or exposing, the additional bottom contact-seam precursors to light, or to a curing light. The bottom contact-seam precursor and the additional bottom contact-seam precursors may be of the same material.

The hardening of the additional top contact-seam precursors may be performed prior to applying the bottom contact-seam precursor. Alternatively, the hardening of the additional top contact-seam precursors may be performed after applying the bottom contact-seam precursor. The hardening of the additional top contact-seam precursor and the hardening of the top contact-seam precursor may be performed simultaneously. The hardening of the additional bottom contact-seam precursors may be performed after applying the bottom contact-seam precursor. The hardening of the additional bottom contact-seam precursor and the hardening of the bottom contact-seam precursor may be performed simultaneously.

After forming the middle section, or the top connectors of the middle section, the top connectors may be semi-cured, or in a semi-cured state. When applying the additional top contact-seam precursor, the photopolymer material of the top section and the top connectors of the middle section may be semi-cured. This contributes to the formation polymer cross-links between the photopolymer material of the additional top contact seams and the photopolymer materials of the top section and the middle section, or the top connectors of the middle section.

Similarly, after forming the middle section, or the bottom connectors of the middle section, the bottom connectors may be semi-cured, or in a semi-cured state. When applying the additional bottom contact-seam precursor, the photopolymer material of the bottom section and the bottom connectors of the middle section may be semi-cured. This contributes to the formation polymer cross-links between the photopolymer material of the additional bottom contact seams and the photopolymer materials of the bottom section and the middle section, or the bottom connectors of the middle section.

After forming the additional top contact seams, the photopolymer material of the additional top contact seams may be semi-cured, or in a semi-cured state. It is specified that the method may comprise: post-hardening the casing, or the top section, middle section, bottom section, top contact seam, and bottom contact seam. The method may further comprise: post-hardening the additional top contact seams in the same step. The post-hardening may comprise: subjecting, or exposing, the additional top contact seams to light, or to a curing light. Additionally or alternatively, the post-hardening may comprise: subjecting, or exposing, the additional top contact seams to heat.

Similarly, after forming the additional bottom contact seams, the photopolymer material of the additional bottom contact seams may be semi-cured, or in a semi-cured state. It is specified that the method may comprise: post-hardening the casing, or the top section, middle section, bottom section, bottom contact seam, and bottom contact seam. The method may further comprise: post-hardening the additional bottom contact seams in the same step. The post-hardening may comprise: subjecting, or exposing, the additional bottom contact seams to light, or to a curing light. Additionally or alternatively, the post-hardening may comprise: subjecting, or exposing, the additional bottom contact seams to heat.

It is understood that the additional top contact seams may be separate and spaced apart from each other. The additional top contact seams may be spaced apart from, or separate from, the top contact seam, or from the first side, second side, third side, and the fourth side of the casing. The additional top contact seams may be distributed, or dispersed, across the battery-cell support, or across the top reinforcement structure, for example parallel with the top side. Similarly, it is understood that the additional bottom contact seams may be separate and spaced apart from each other. The additional bottom contact seams may be spaced apart from, or separate from, the bottom contact seam, or from the first side, second side, third side, and the fourth side of the casing. The additional bottom contact seams may be distributed, or dispersed, across the battery-cell support, or across the bottom reinforcement structure, for example parallel with the bottom side.

It is understood that the top connectors may be separate and spaced apart from each other. The top connectors may be spaced apart from, or separate from, the top groove and/or the top ridge. The top connectors may be distributed, or dispersed, across the battery-cell support, or the top reinforcement structure, for example parallel with the top side. The top connectors may be spaced apart from the first side, second side, third side, and fourth side of the casing. It is understood that the top connectors may be located at the top side of the casing.

Similarly, it is understood that the bottom connectors may be separate and spaced apart from each other. The bottom connectors may be spaced apart from, or separate from, the bottom groove and/or the bottom ridge. The bottom connectors may be distributed, or dispersed, across the battery-cell support, or the bottom reinforcement structure, for example parallel with the bottom side. The bottom connectors may be spaced apart from the first side, second side, third side, and fourth side of the casing. It is understood that the bottom connectors may be located at the bottom side of the casing.

The top connectors, or a subset of the top connectors, may have a narrow profile transverse the top side. This means that the width of the top connectors parallel with the top side is smaller than the height transverse to the top side. The top connectors, or a subset of the top connectors, may have a narrow profile transverse the top flow direction and parallel with the top side. The top connectors, or a subset of the top connectors, may have a cross-section outlining a portion of a smooth monotonic curve, for example an s-like curve, that is aligned with the top flow direction at its endpoints.

Similarly, the bottom connectors, or a subset of the bottom connectors, may have a narrow profile transverse the bottom side. This means that the width of the bottom connectors parallel with the bottom side is smaller than the height transverse to the bottom side. The bottom connectors, or a subset of the bottom connectors, may have a narrow profile transverse the bottom flow direction and parallel with the bottom side. The bottom connectors, or a subset of the bottom connectors, may have a cross-section outlining a portion of a smooth monotonic curve, for example an s-like curve, that is aligned with the bottom flow direction at its endpoints.

The top section may have, or form, a plurality of top depressions, wherein a top connector extends into each top depression. It is understood that a top connector extends into each top depression. Each additional top contact seam then connects the top section to the middle section within a top depression. Worded differently, each additional top contact seam may be located in a top depression. Worded differently, each additional top contact seam may connect a depression of the top section to a top connector of the middle section. It is understood that each top connector may have an end at the top section with a geometry that matches the geometry of the top depression it extends into. For example, the end of a top section may outline a circle transverse to the top side and the depression may outline a circle that has a slightly greater radius. The top depressions are advantageous in combination with the top section forming a top groove, as described above. In the method, the additional top contact-seam precursors and the top contact-seam precursor can then be applied in the top depressions and the top groove with the top depressions and the top groove facing upwards.

Similarly, the bottom section may have, or form, a plurality of bottom depressions, wherein a bottom connector extends into each bottom depression. It is understood that a bottom connector extends into each bottom depression. Each additional bottom contact seam then connects the bottom section to the middle section within a bottom depression. Worded differently, each additional bottom contact seam may be located in a bottom depression. Worded differently, each additional bottom contact seam may connect a depression of the bottom section to a bottom connector of the middle section. It is understood that each bottom connector may have an end at the bottom section with a geometry that matches the geometry of the bottom depression it extends into. For example, the end of a bottom section may outline a circle transverse to the bottom side and the depression may outline a circle that has a slightly greater radius. The bottom depressions are advantageous in combination with the bottom section forming a bottom groove, as described above. In the method, the additional bottom contact-seam precursors and the bottom contact-seam precursor can then be applied in the bottom depressions and the bottom groove with the bottom depressions and the bottom groove facing upwards.

It is understood that the top connectors may extend within, or through, the top conduit section. Similarly, it is understood that the bottom connectors may extend within, or through, the bottom conduit section.

The top reinforcement structure may form, or have, a top intermediate support, or top reinforcement, that is located between the battery-cell support and the top section and spaced apart from the battery-cell support. It is specified above that in the third aspect of the proposed technology, forming the middle section may comprise: forming the middle section as a monolithic structure. It is understood that the top intermediate support may form part of the monolithic structure. Worded differently, forming the middle section may comprise: forming the middle section, or the top reinforcement structure, with a top intermediate support that is arranged to be located between the battery-cell support and the top section and that is spaced apart from the battery-cell support.

The top intermediate support may be connected to the battery-cell support via the top connectors. The top intermediate support may be connected to the top section via the top connectors and the additional top contact seams. Worded differently, the top connectors may form part of the top intermediate support. Worded differently, the top intermediate support may be supported by the top connectors.

Similarly, the bottom reinforcement structure may form, or have, a bottom intermediate support, or bottom reinforcement, that is located between the battery-cell support and the bottom section and spaced apart from the battery-cell support. It is specified above that in the third aspect of the proposed technology, forming the middle section may comprise: forming the middle section as a monolithic structure. It is understood that the bottom intermediate support may form part of the monolithic structure. Worded differently, forming the middle section may comprise: forming the middle section, or the bottom reinforcement structure, with a bottom intermediate support that is arranged to be located between the battery-cell support and the bottom section and that is spaced apart from the battery-cell support.

The bottom intermediate support may be connected to the battery-cell support via the bottom connectors. The bottom intermediate support may be connected to the bottom section via the bottom connectors and the additional bottom contact seams. Worded differently, the bottom connectors may form part of the bottom intermediate support. Worded differently, the bottom intermediate support may be supported by the bottom connectors.

It is specified that the top reinforcement structure is spaced apart from the battery-cell support. This allows for the thermal-regulating fluid to pass between the top intermediate support and the battery-cell support. The top intermediate support may be located, or arranged to be located, at the top section. The top intermediate support may be spaced apart, or arranged to be spaced apart from, from the top section. This allows for the thermal-regulating fluid to pass between the top section and the top intermediate support, even if the latter is located at the top section. The top intermediate support may be located closer, or arranged to be located closer, to the top section than to the battery-cell support. The top intermediate support may extend, or may be arranged to extend, parallel with the top side. It is understood that the top intermediate support may outline a planar geometry.

Similarly, it is specified that the bottom reinforcement structure is spaced apart from the battery-cell support. This allows for the thermal-regulating fluid to pass between the bottom intermediate support and the battery-cell support. The bottom intermediate support may be located, or arranged to be located, at the bottom section. The bottom intermediate support may be spaced apart, or arranged to be spaced apart from, from the bottom section. This allows for the thermal-regulating fluid to pass between the bottom section and the bottom intermediate support, even if the latter is located at the bottom section. The bottom intermediate support may be located closer, or arranged to be located closer, to the bottom section than to the battery-cell support. The bottom intermediate support may extend, or may be arranged to extend, parallel with the bottom side. It is understood that the bottom intermediate support may outline a planar geometry.

The top intermediate support may be connected to, or form a structure that is connected to, the first side and the second side of the casing and between the third side and the fourth side of the casing. Worded differently, the top intermediate support may extend from the first side to the second side of the casing, and from the third side to the fourth side of the casing. This contributes to a greater structural strength of the middle section, and in extension of the casing. Similarly, the bottom intermediate support may be connected to, or form a structure that is connected to, the first side and the second side of the casing and between the third side and the fourth side of the casing. Worded differently, the bottom intermediate support may extend from the first side to the second side of the casing, and from the third side to the fourth side of the casing. This contributes to a greater structural strength of the middle section, and in extension of the casing.

It is understood that the top intermediate support may be located within the top conduit section. Similarly, it is understood that the bottom intermediate support may be located within the bottom conduit section.

The top intermediate support may be arranged to fix, or support, each battery cell in a top interference fit. In the second and third aspects of the proposed technology, the top intermediate support may fix, or support, each battery cell in a top interference fit. The top interference fit may be weaker than the interference fit of the battery-cell support. The top intermediate support may be arranged to engage each battery cell at the top end, or top end section, of the battery cell. The top interference fit contributes to improve the structural strength of the battery module.

Alternatively, the top intermediate support may be arranged to define a top clearance between the top intermediate support and each battery cell. This means that the top intermediate support may contact a battery cell, but it does not fix it in an interference fit. In the second and third aspects of the proposed technology, there may be a top clearance between the top intermediate support and each battery cell. The top intermediate support may be arranged to guide each battery cell when arranging the plurality of battery cells in the middle section. The top clearance contributes to improve the flow of the thermal-regulation liquid in the conduit, or more precisely in the top conduit section.

Similarly, the bottom intermediate support may be arranged to fix, or support, each battery cell in a bottom interference fit. In the second and third aspects of the proposed technology, bottom intermediate support may fix, or support, each battery cell in a bottom interference fit. The bottom interference fit may be weaker than the interference fit of the battery-cell support. The bottom intermediate support may be arranged to engage each battery cell at the bottom end, or bottom end section, of the battery cell. The bottom interference fit contributes to improve the structural strength of the battery module. Alternatively, the bottom intermediate support may be arranged to define a bottom clearance between the bottom intermediate support and each battery cell. This means that the bottom intermediate support may contact a battery cell, but it does not fix it in an interference fit. In the second and third aspects of the proposed technology, there may be a bottom clearance between the bottom intermediate support and each battery cell. The bottom clearance contributes to improve the flow of the thermal-regulation liquid in the conduit, or more precisely in the bottom conduit section.

The top intermediate support may be arranged to form top liquid passages between each battery cell and the top intermediate support. In the second and third aspects of the proposed technology, the top intermediate support may form top liquid passages between each battery cell and the top intermediate support. It is understood that the top liquid passages may allow a thermal-regulating liquid to contact the battery cell between the battery cell and the top intermediate support. It is further understood that the top liquid passages may allow a thermal-regulating liquid to pass through the top intermediate support transversely to the top side of the casing, for example towards and/or away from the top section for cooling the top busbars located at the top section.

Similarly, the bottom intermediate support may be arranged to form bottom liquid passages between each battery cell and the bottom intermediate support. In the second and third aspects of the proposed technology, the bottom intermediate support may form bottom liquid passages between each battery cell and the bottom intermediate support. It is understood that the bottom liquid passages may allow a thermal-regulating liquid to contact the battery cell between the battery cell and the bottom intermediate support. It is further understood that the bottom liquid passages may allow a thermal-regulating liquid to pass through the bottom intermediate support transversely to the bottom side of the casing, for example towards and/or away from the bottom section for cooling the bottom busbars located at the bottom section.

The top intermediate support may have, or form, a honeycomb structure that forms, or has, a plurality of hexagonal top through holes, wherein each hexagonal top through hole is arranged to receive a battery cell of the plurality of battery cells. In the second and third aspects of the proposed technology, a battery cell is received in, or extends into, each hexagonal top through hole. The hexagonal top through holes may be arranged in packing that matches the above mentioned triangular or hexagonal packing of the battery cells or the through holes of the battery-cell support. For example, it is specified that the battery-cell support may have, or form, a plurality of through holes, and each hexagonal top through hole may be centered on a through hole formed by the battery-cell support. The honeycomb structure contributes to a greater structural strength of the middle section, and in extension of the casing.

Each hexagonal top through hole may extend, or be arranged to extend, transverse to the top side of the casing. It is specified that each battery cell may outline a circular-cylindrical geometry. For each battery cell, the top intermediate support may engage, or be arranged to engage, the battery cell at six separate locations, and the top intermediate support may define, or be arranged to define, six top liquid passages between the battery cell and the top intermediate support, for example as described above. Alternatively, each battery cell may be spaced apart from the top intermediate support.

Similarly, the bottom intermediate support may have, or form, a honeycomb structure that forms, or has, a plurality of hexagonal bottom through holes, wherein each hexagonal bottom through hole is arranged to receive a battery cell of the plurality of battery cells. In the second and third aspects of the proposed technology, a battery cell is received in, or extends into, each hexagonal bottom through hole. The hexagonal bottom through holes may be arranged in packing that matches the above mentioned triangular or hexagonal packing of the battery cells or the through holes of the battery-cell support. For example, it is specified that the battery-cell support may have, or form, a plurality of through holes, and each hexagonal bottom through hole may be centered on a through hole formed by the battery-cell support. The honeycomb structure contributes to a greater structural strength of the middle section, and in extension of the casing.

Each hexagonal bottom through hole may extend, or be arranged to extend, transverse to the bottom side of the casing. It is specified that each battery cell may outline a circular-cylindrical geometry. For each battery cell, the bottom intermediate support may engage, or be arranged to engage, the battery cell at six separate locations, and the bottom intermediate support may define, or be arranged to define, six bottom liquid passages between the battery cell and the bottom intermediate support, for example as described above. Alternatively, each battery cell may be spaced apart from the top intermediate support.

The top intermediate support may support the above-described top busbars. Worded differently, the top busbars may rest on the top intermediate support. The top busbars may be located between the top intermediate support and the top section. Similarly, the bottom intermediate support may support the above-described bottom busbars. Worded differently, the bottom busbars may rest on the bottom intermediate support. The bottom busbars may be located between the bottom intermediate support and the bottom section.

Each top busbars may have, or form, a top busbar aperture or cutout. The top reinforcement structure may have, or form, plurality of top busbar protrusions, wherein for each top busbar, a top busbar protrusion extends through the top busbar aperture or cutout of the top busbar. The top busbar protrusions may extend towards the top section. The top busbar protrusions may contact the top section. The top busbar protrusions may extend transverse to the top side. It is understood that the top busbar protrusion may engage the top busbar within the top busbar aperture or cutout. This contributes to fix the position of the top busbars relative to the top intermediate support, and in extension to the battery cells.

Each bottom busbars may have, or form, a bottom busbar aperture or cutout. The bottom reinforcement structure may have, or form, a plurality of bottom busbar protrusions, wherein for each bottom busbar, a bottom busbar protrusion extends through the bottom busbar aperture or cutout of the bottom busbar. The bottom busbar protrusions may extend towards the bottom section. The bottom busbar protrusions may contact the bottom section. The bottom busbar protrusions may extend transverse to the bottom side. It is understood that the bottom busbar protrusion may engage the bottom busbar within the bottom busbar aperture or cutout. This contributes to fix the position of the bottom busbars relative to the bottom intermediate support, and in extension to the battery cells.

The top section may have, or form, plurality of top busbar spacers, or top protrusions, wherein each top busbar spacers contacts, or engages, or is arranged to contact, or engage, a top busbar. This contributes to fix the position of the top busbars, and in extension the battery cells, relative to the top section. It is understood that the top busbar spacers may extend towards the top busbars, the top intermediate support, or battery-cell support, and that they may extend transverse to the top side. Each top busbar spacer may be centered on a battery cell, located at a battery cell, and/or at the top end or top electric terminal of a battery cell. It is specified above that in the third aspect of the proposed technology, forming the top section may comprise: forming the top section as a monolithic structure. It is understood that the top busbar spacers may form part of the monolithic structure. Worded differently, forming the top section may comprise: forming the top section with a plurality of top busbar spacers, wherein each top busbar spacer is arranged to contact, or engage, a top busbar.

Similarly, the bottom section may have, or form, plurality of bottom busbar spacers, or bottom protrusions, wherein each bottom busbar spacers contacts, or engages, or is arranged to contact, or engage, a bottom busbar. This contributes to fix the position of the bottom busbars, and in extension the battery cells, relative to the bottom section. It is understood that the bottom busbar spacers may extend towards the bottom busbars, the bottom intermediate support, or battery-cell support, and that they may extend transverse to the bottom side. Each bottom busbar spacer may be centered on a battery cell, located at a battery cell, and/or at the bottom end or bottom electric terminal of a battery cell. It is specified above that in the third aspect of the proposed technology, forming the bottom section may comprise: forming the bottom section as a monolithic structure. It is understood that the bottom busbar spacers may form part of the monolithic structure. Worded differently, forming the bottom section may comprise: forming the bottom section with a plurality of bottom busbar spacers, wherein each bottom busbar spacer is arranged to contact, or engage, a bottom busbar.

It is understood that the top busbar spacers may be arranged to allow a thermal-regulating liquid to pass between them. It is further understood that the top busbar spacers may be arranged to allow a thermal-regulating fluid to pass between the top busbars and the top section. This contributes to a more efficient cooling of the top busbars, and in extension of the battery cells. The top busbar spacers may be spaced apart from, or separate from, the first side, second side, third side, and the fourth side of the casing. The top busbar spacers may be distributed, or dispersed, across the top section. It is specified that the battery-cell support may position the battery cells in parallel rows. The top busbar spacers may be positioned in corresponding rows. It is further specified that battery cells may be arranged in a triangular or hexagonal packing. The top busbar spacers may be positioned in a pattern that matches the triangular or hexagonal packing.

Similarly, it is understood that the bottom busbar spacers may be arranged to allow a thermal-regulating liquid to pass between them. It is further understood that the bottom busbar spacers may be arranged to allow a thermal-regulating fluid to pass between the bottom busbars and the bottom section. This contributes to a more efficient cooling of the bottom busbars, and in extension of the battery cells. The bottom busbar spacers may be spaced apart from, or separate from, the first side, second side, third side, and the fourth side of the casing. The bottom busbar spacers may be distributed, or dispersed, across the bottom section. It is specified that the battery-cell support may position the battery cells in parallel rows. The bottom busbar spacers may be positioned in corresponding rows. It is further specified that battery cells may be arranged in a triangular or hexagonal packing. The bottom busbar spacers may be positioned in a pattern that matches the triangular or hexagonal packing.

It is understood that the top busbar spacers may be located within the top conduit section. Similarly, it is understood that the bottom busbar spacers may be located within the bottom conduit section. It is understood that the top busbars may be arranged to functions as heat sinks for the battery cells. Similarly, it is understood that the bottom busbars may be arranged to functions as heat sinks for the battery cells.

The bottom reinforcement structure, or bottom intermediate support, may have, or form, a plurality of battery rests, wherein each battery rest defines, or is arranged to define, a nominal position, or rest position, of a battery cell relative to the battery-cell support. Each battery rest may engage, or may be arranged to engage, the bottom end of a battery cell. The battery rest may be spaced apart from, or may be arranged to be spaced apart from, the bottom electrical terminal of the battery cell. This allows access for the bottom busbars. The battery rest may engage, or may be arranged to engage, the bottom end of the battery cell at the edge of the bottom end. The battery rest may engage, or may be arranged to engage, the bottom end of a battery at one side of the battery cell. The battery rests are advantageous when arranging the plurality of battery cells in the middle section.

In the third aspect of the proposed technology, arranging the plurality of battery cells may comprise: inserting battery cells into the battery-cell support via the top reinforcement structure and positioning the battery cells in contact with the battery rests.

The terms "top" and "bottom" are not to be regarded as indicating absolute orientations. The terminology is used for easier visualization of the proposed technology. For example, the top section may face downwards or sideways in use, and the bottom section may face upwards or sideways. Throughout the specifications, the term "top" can be replaced by the term "first" and the term "bottom" can be replaced by the term "second".

### BRIEF DESCRIPTION OF THE DRAWINGS

A more complete understanding of the abovementioned and other features and advantages of the proposed technology will be apparent from the following detailed description of preferred embodiments of the proposed technology in conjunction with the appended drawings, wherein:
Figs. 1a and 1b are perspective views of an embodiment of a battery module.
Figs. 2a and 2b are perspective views of the battery module of Figs. 1a and 1b with the top section and the bottom section removed.
Figs. 3a and 3b are perspective views of the middle section of the battery module of
Figs. 1a and 1b.

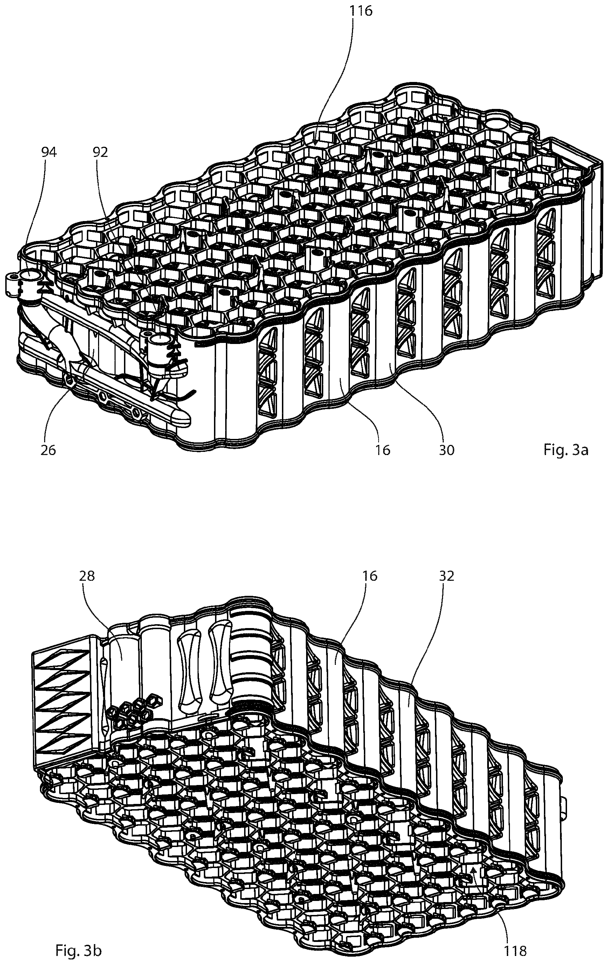

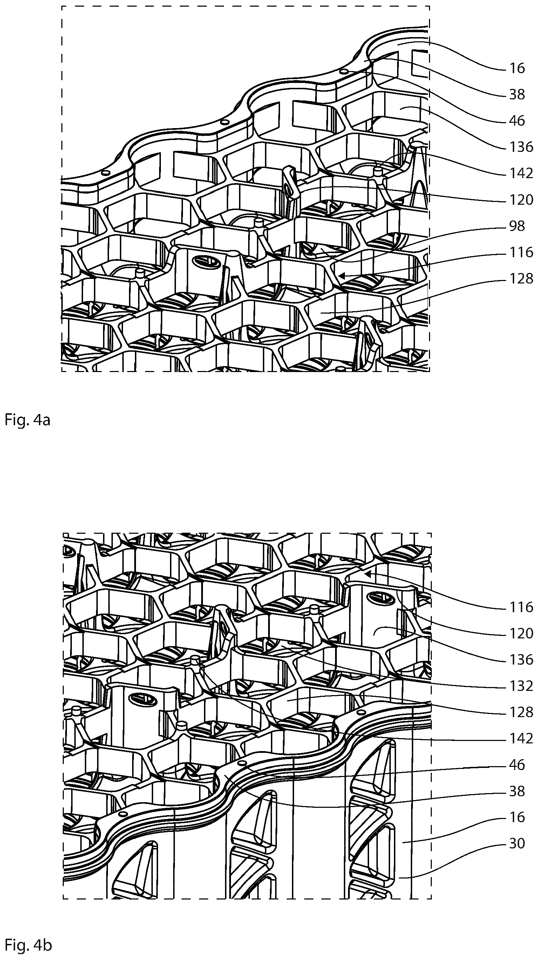

Figs. 4a and 4b are close-up views of Fig. 3a.

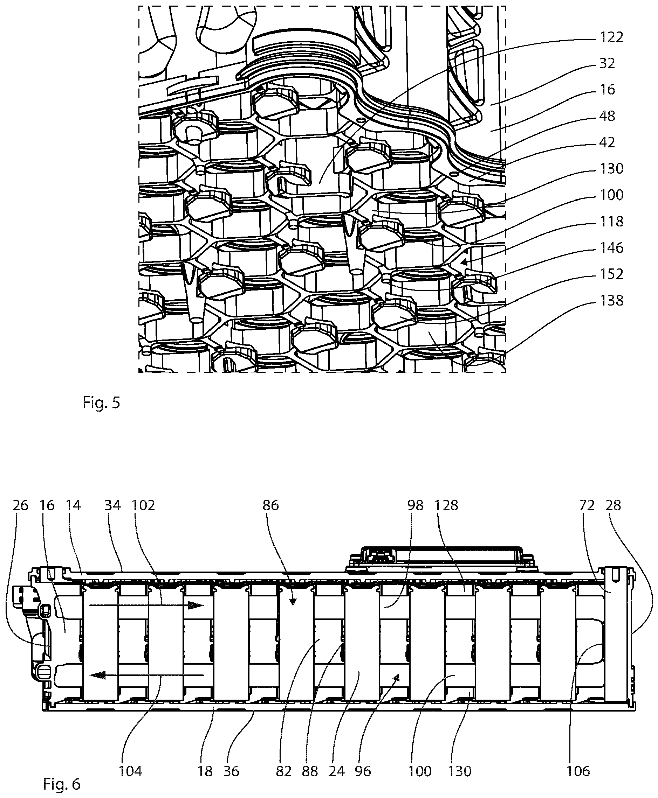

Fig. 5 is a close-up view of Fig. 3b.

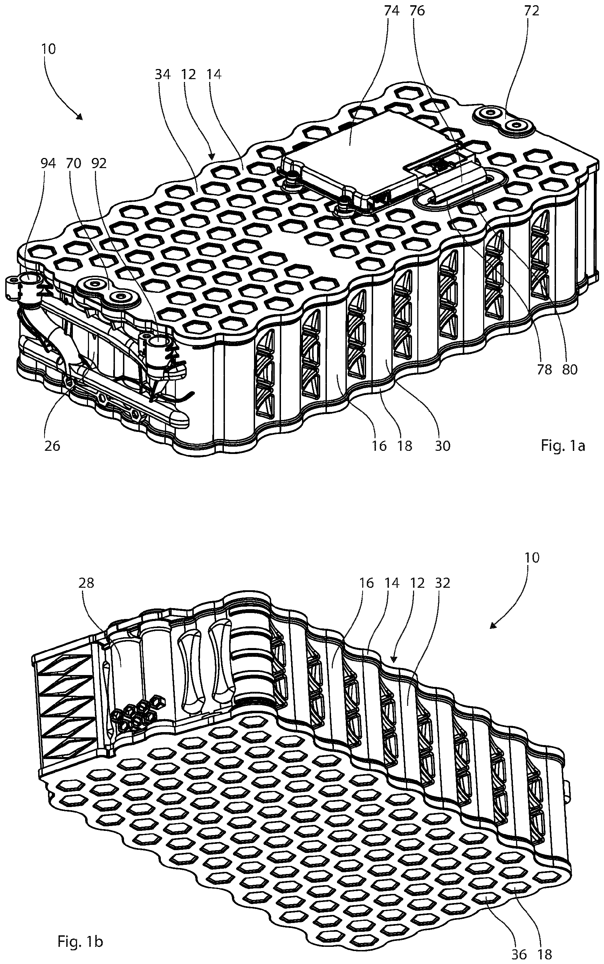

Fig. 6 is a cross-sectional view of the battery module of Figs. 1a and 1b.

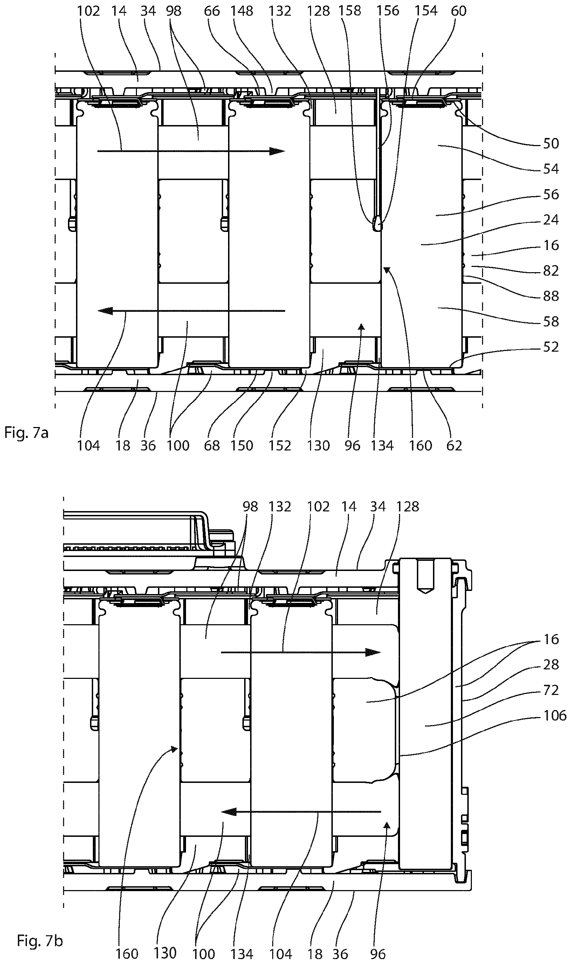

Figs. 7a and 7b are close-up views of Fig. 6.

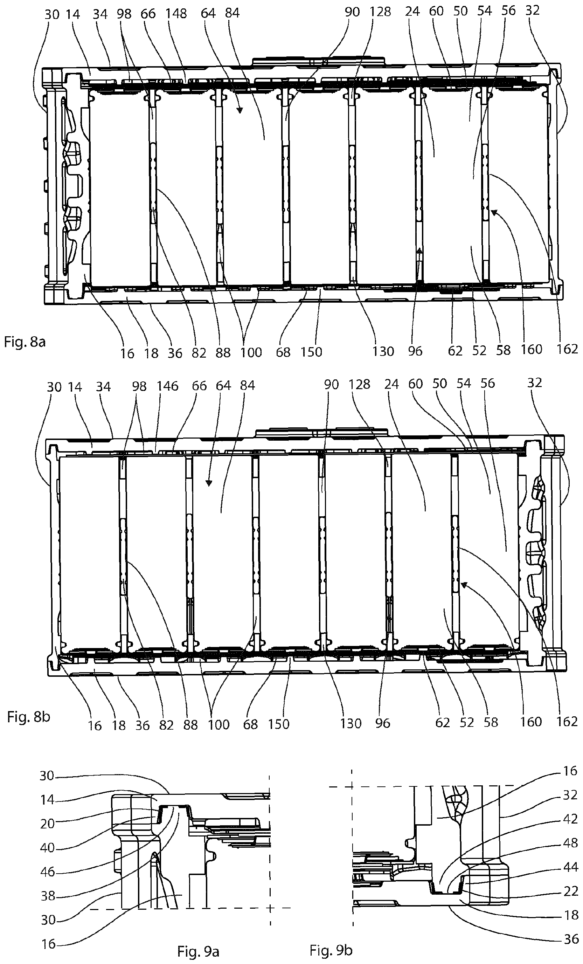

Figs. 8a and 8b are two different cross-sectional views of the battery module of Figs. 1a and 1b.
Fig. 9a is close-up view of Fig.8a and Fig. 9b is close-up view of Fig.8b.

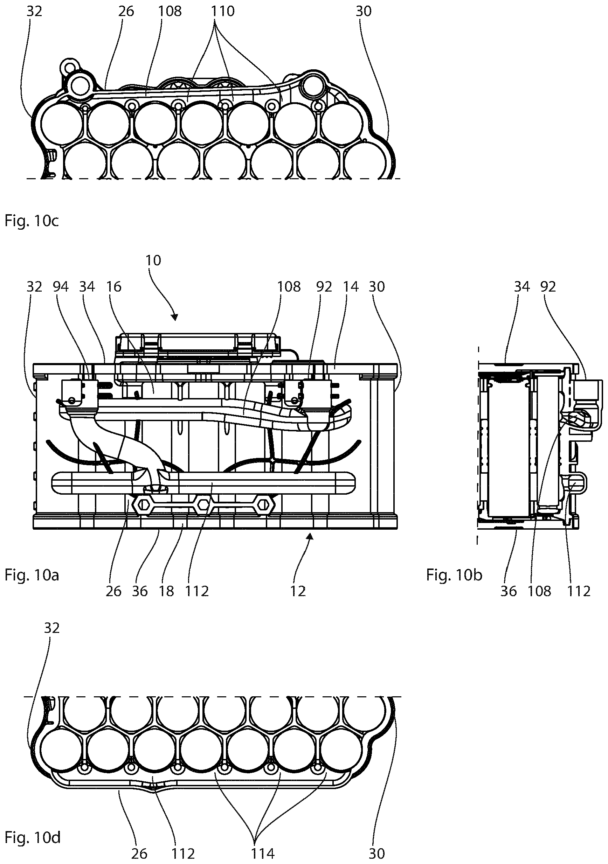

Fig. 10a is a side view of the battery module of Figs. 1a and 1b, and Figs. 10b to 10d are partial cross sectional views of the battery module of Figs. 1a and 1b.

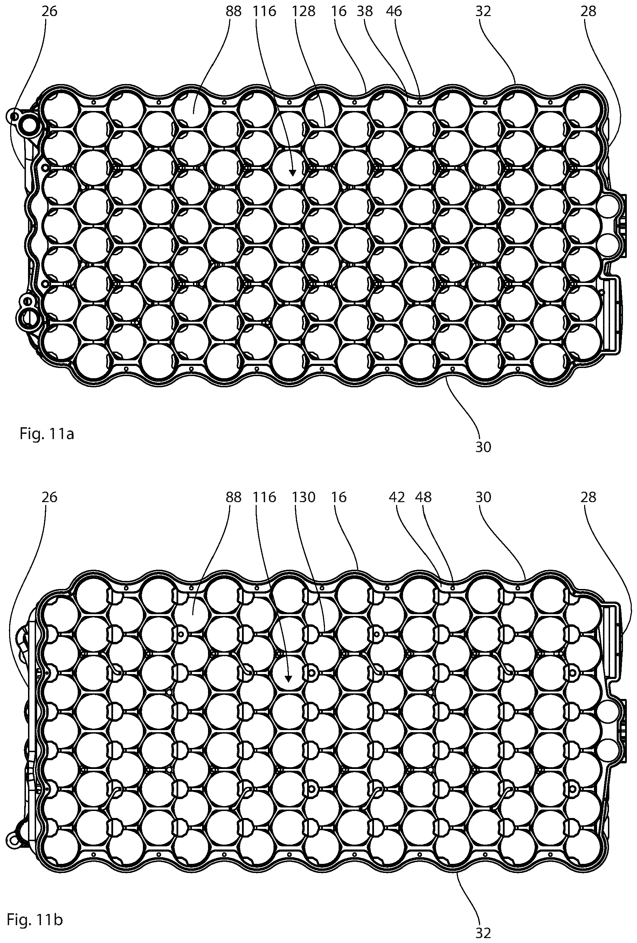

Figs. 11a and 11b are top views respective bottom views of the middle section of the battery module of Figs. 1a and 1b.

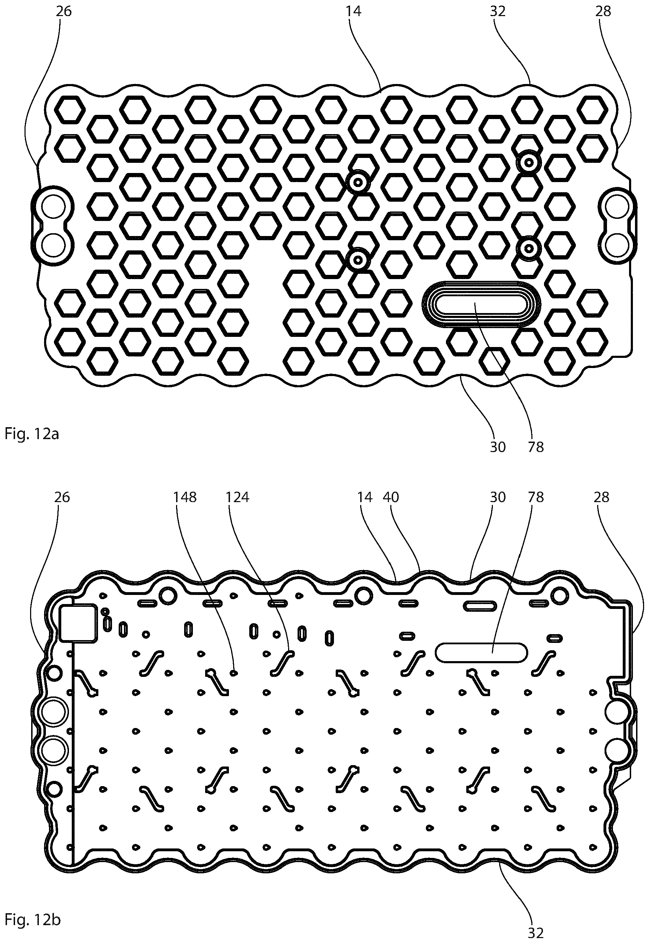

Figs. 12a and 12b are top views respective bottom views of the top section of the battery module of Figs. 1a and 1b.

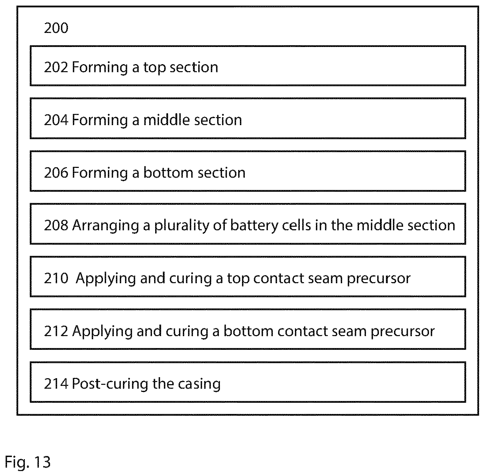

Fig. 13 schematically illustrates a method of manufacturing the battery module of Figs. 1a and 1b.

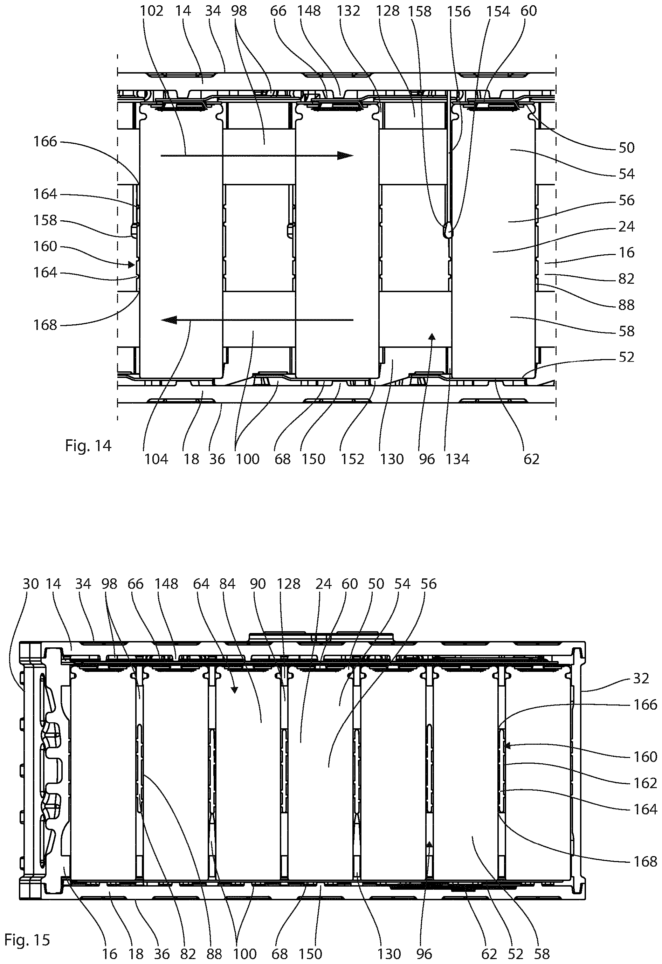

Fig. 14 is a cross-sectional view of another embodiment of a battery module.
Fig. 15 is another cross-sectional view of the battery module of Fig. 14.

### DETAILED DESCRIPTION OF THE DRAWINGS

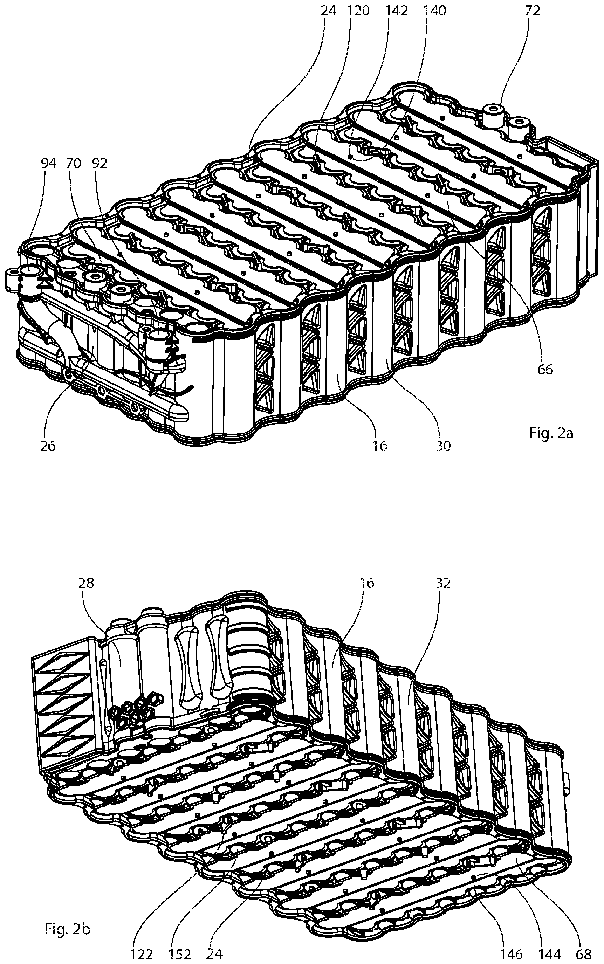

**Figs. 1a and 1b** show an embodiment of a battery module 10. The battery module has a casing 12 composed of a top section 14, a middle section 16, and a bottom section 18, and **Figs. 2a and 2b** show the battery module 10 with the top section 14 and the bottom section 18 removed. The battery module 10 has a plurality of identical rechargeable battery cells 24. The middle section 16 supports the battery cells 24, and the top section 14, the middle section 16, and the bottom section 18 jointly enclose the battery cells 24.

The middle section 16 defines a first side 26 and an opposite second side 28 of the casing 12. The middle section 16 further defines a third side 30 and an opposite fourth side 32 of the casing 12 that extend between the first side 26 and the second side 28. The top section 14 defines a top side 34 of the casing 12 and the bottom section 18 defines an opposite bottom side 36 of the casing 12. This way, the middle section 16, top section 14, and bottom section 18 jointly outline a rectangular cuboid.

The casing 12 further has a top contact seam 20 and a bottom contact seam 22, see **Figs. 9a and 9b****.** The top contact seam 20 attaches the top section 14 to the middle section 16 and the bottom contact seam 22 attaches the bottom section 18 to the middle section 16. The top contact seam 20 is annular and connects and seals the top section 14 to the middle section 16 at the first side 26, second side 28, third side 30, and fourth side 32 of the casing 12. Similarly, the bottom contact seam 22 is annular and connects and seals the bottom section 18 to the middle section 16 at the first side 26, second side 28, third side 30, and fourth side 32 of the casing 12, as shown in **Fig.** 9b.

As shown for example in **Figs. 9a****,** **11a****, and** **12b****,** the middle section 16 forms a top ridge 38 and the top section 14 forms a top groove 40, and the top ridge 38 is positioned in the top groove 40. The top contact seam 20 is located in the top groove 40 and connects the top groove 40 to the top ridge 38 of the top section 14. The middle section 16 forms a plurality of top spacers 46 within the top groove 40 that extend from the top ridge 38 through the top contact seam 20 and space the top ridge 38 apart from the top groove 40 in the manufacturing. As shown for example in in **Fig. 9b** **and** **11b****,** the middle section 16 forms a bottom ridge 42 and the bottom section 18 forms a bottom groove 44, and the bottom ridge 42 is positioned in the bottom groove 44. The bottom contact seam 22 is located in the bottom groove 44 and connects the bottom groove 44 of the middle section 16 to the bottom ridge 42 of the bottom section 18. The middle section 16 forms a plurality of bottom spacers 48 within the bottom groove 44 that extend from the bottom ridge 42 through the bottom contact seam 22 and space the bottom ridge 42 apart from the bottom groove 44 in the manufacturing.

The top section 14, middle section 16, bottom section 18, top contact seam 20, and bottom contact seam 22 are of the same cured photopolymer material. Each of the top section 14, middle section 16, and bottom section 18 have been manufactured by stereolithography and are monolithic structures. The top contact seam 20 and the bottom contact seam 22 are of the same cured photopolymer material. The polymer material of the top contact seam 20 forms polymer cross-links with the polymer material of the middle section 16 and with the polymer material of the top section 14. Similarly, the photopolymer material of the bottom contact seam 22 forms polymer cross-links with the photopolymer material of the middle section 16 and with the photopolymer material of the bottom section 18. This way, the top section 14, middle section 16, bottom section 18, top contact seam 20, and bottom contact seam 22 jointly form a monolithic structure, or unitary structure.

As shown in **Figs. 2a, 2b****,** **7a, 7b****,** **8a, and 8b****,** the battery cells 24 are cylindrical. Each has a top end section 54 located at a top end 50, a bottom end section 58 located at a bottom end 52, and a midsection 56 positioned between the top end section 54 and the bottom end section 58. Each battery cell 24 has a top electric terminal 60 at the top end 50 and a bottom electrical terminal 62 at the bottom end 52.

As shown in **Figs. 8a and 8b****,** the battery cells 24 are arranged in in a plurality of battery groups 64. The battery cells 24 in each group are electrically coupled in parallel, and the battery groups 64 in turn are electrically coupled in in series. The battery module 10 has a plurality of copper busbars 66 and 68 that are arranged in pairs, and the busbars of each pair electrically couples the battery cells 24 of a battery group 64 in parallel. Each pair of neighboring battery groups 64 electrically couples in series by a is busbar 66 and 68. The busbars are divided into a first set of top busbars 66 that are located at the top section 14 and a second set of bottom busbars 68 that are located at the bottom section 18.

As can be seen in **Figs. 1a** **and** **2a****,** the battery module 10 has a first battery-module terminal 70 located at the first side 26 of the casing 12 and a second battery-module terminal 72 located at the second side 28 of the casing. Both are accessible at the top side 34 of the casing 12. The first battery-module terminal 70 and the second battery-module terminal 72 are operationally connected to the battery groups 64 and arranged to allow the battery module 10 to be connected in an electric circuit.

The battery module 10 has a battery-module control unit 74 located at and attached to the top side 34 of the casing 12 that can monitor the function of the battery cells 24, see **Fig.1a****.** The battery module 10 has sensors 154 in the form of temperature sensors inside the casing 12 and a circuit arrangement 76 that connects the sensors to the battery-module control unit 74, see Fig. 7a. The top section 14 forms an access aperture 78 through which the circuit arrangement 76 extends, and an access seal 80 seals the circuit arrangement 76 to the casing 12. The circuit arrangement 76 has sensor connectors 156 in the form of electric cables, and each sensor connector 156 connects to a sensor 154. It further has an FPC located at and arranged parallel with the top section 14, and each sensor connectors 156 is coupled to the battery-module control unit 74 via the FPC.

**Figs. 3a and 3b** show the middle section 16 of the casing 12. The middle section 16 forms a battery-cell support 82 that extends from the first side 26 to the second side 28 of the casing 12 and from the third side 30 to the fourth side 32 of the casing 12, see **Figs. 6****,** **8a, and 8b****.** The battery-cell support 82 is located at the center between the top side 34 and the bottom side 36 and extends parallel with the top side 34 and the bottom side 36. The battery-cell support 82 forms through holes 88 that extend transversely to the top side 34 and the bottom side 36 of the casing 12. A battery cell 24 is positioned in each through hole 88, and each through hole 88 outlines a circular cylindrical geometry matching the geometry of the cylindrical battery cells 24. The battery-cell support 82 engages each battery cell 24 at the midsection 56 and supports each battery cells 24 in an interference fit. The top end section 54 and the bottom end section 58 of the battery cell 24 extends from the battery-cell support 82 with the top 50 end and the bottom end 52 located on opposite side of the battery-cell support 82.

The battery-cell support 82 positions the battery cells 24 in parallel rows 84 with each row 84 of battery cells 24 corresponding to a battery group 64, see **Figs. 8a and 8b****.** The rows 84 are aligned with the first side 26 and the second side 28 of the casing 12. The battery-cell support 82 further positions the rows 84 in a column 86 that is aligned with the third side 30 and fourth side 32 of the casing 12, see **Fig. 6****.** The battery-cell support 82 positions the through holes 88, and in extension the battery cells 24, in a in a triangular/hexagonal packing that extends between the first side 26 and the second side 28 of the casing 12, and between the third side 30 and the fourth side 32 of the casing 12, see **Figs. 11a and 11b****.**

For each through hole 88, the battery-cell support 82 forms a wall 160 that surrounds the through hole 88, see **Figs. 7a, 7b****,** **8a and 8b****.** The wall 160 surrounding a through hole 88 also partly surrounds a neighboring through hole 88. The wall 160 of each through hole 88 is connected to and flush with the battery cell 24 in the through hole 88. The through holes 88 have sensor cut-outs 158 that are formed in the walls 160 of the through holes 88 that are open towards and faces the battery cells 24 in the through holes 88, see **Fig. 7a****.** Each sensor cut-out 158 extends from the side of the battery-cell support 82 that faces the top section 14 to the center between the top end 50 and the bottom end 52 of the battery cell 24 in the through hole 88. For each battery group 64, a sensor 154 and a sensor connector 156 is positioned in a sensor cut-out 158. The battery-cell support 82 forms a wall section 162 between each pair neighboring through holes 88, and the wall section 162 is connected to and flush with the battery cells 24 in the through holes 88.The first and last battery cell 24 of every row 84 are abreast, or aligned, at the third side 30 and the fourth side 32 of the casing 12, see **Figs. 2a and 2b****.** The battery cells 24 jointly define a first undulating profile at the third side 30 of the casing 12 and a second undulating profile at the fourth side 32 of the casing 12 that is complementary to the first undulating profile. The third side 30 of the casing 12 forms an undulating first side profile that matches the first undulating profile defined by the battery cells 24, and the fourth side of 32 the casing 12 forms an undulating second side profile that matches the second undulating profile defined by the battery cells 24 and is complementary to the first side profile.

The middle section 16 of the casing 12 forms an inlet 92 and an outlet 94 for a thermal-regulating liquid. The inlet 92 and the outlet 94 are both located at the first side 26 of the casing 12 and both face in the same direction as the top side 34 of the casing 12, see for example Figs. 1a and 10a. The casing 12 forms a conduit 96 for the thermal-regulating liquid that can lead the thermal-regulating liquid from the inlet 92 to the outlet 94, see for example **Figs. 7a, 7b****,** **8a, and 8b****.**

Each battery cell 24 extends into the conduit 96, and the conduit 96 can distribute the thermal-regulating liquid to all of the battery cells 24. The battery-cell support 82 positions the battery cells 24 such that a gap 90 is formed between each pair of neighboring battery cells 24 that allows for a thermal-regulating fluid to pass between the pair of neighboring battery cells 24. This way, the gaps 90 form part of the conduit 96.

The conduit 96 has a top conduit section 98 and a bottom conduit section 100 that both can distribute the thermal-regulating liquid to all battery cells 24. Both the top conduit section 98 and the bottom conduit section 100 extend between the first side 26 and the second side 28 of the casing 12, and between the third side 30 and the fourth side 32 of the casing 12. The top conduit section 98 is located between the battery-cell support 82 and the top section 14 of the casing 12, and the bottom conduit section 100 is located between the battery-cell support 82 and the bottom section 18 of the casing 12.

Each battery cell 24 extends into the top conduit section 98 with the top end section 54 of the battery cell 24 located in the top conduit section 98. This way, the battery cells 24 are arranged to be exposed to the thermal-regulating liquid within the top conduit section 98. Similarly, each battery cell 24 extends into the bottom conduit section 100 with the bottom end section 58 of the battery cell 24 located in the bottom conduit section 100. This way, the battery cells 24 are arranged to be exposed to the thermal-regulating liquid within the bottom conduit section 100. The battery-cell support 82 cooperate with the battery cells 24 and jointly separate the top conduit section 98 and the bottom conduit section 100 and prevent the thermal-regulating liquid from passing between the top conduit section 98 and the bottom conduit section 100.

The top conduit section 98 is fluidly coupled to the inlet 92 at the first side 26 of the casing 12, and the bottom conduit section 100 is fluidly coupled to the outlet 94, or inlet 92, at first side 26 of the casing 12. The top conduit section 98 is fluidly coupled to the bottom conduit section 100 at the second side 28 of the casing 12 by a plurality of channels 106 that extend through the middle section 16 of the casing 12 and conduct the thermal-regulating liquid transverse to the top flow direction 102 and the bottom flow direction 104, see **Figs. 6** **and** **7b****.** This way, the top conduit section 98 is arranged to conduct the thermal-regulating liquid in a top flow direction 102 from the first side 26 to the second side 28 of the casing 12, and the bottom conduit section 100 is arranged to conduct the thermal-regulating liquid in a bottom flow direction 104 from the second side 28 to the first side 26 of the casing 12 that is opposite to the top flow direction 102, see **Figs. 6****,** **7a, and 7b****.**

The conduit 96 has an inlet manifold 108 formed by the middle section 16 of the casing 12 that fluidly couples the inlet 92 and the top conduit section 98, see **Figs. 10a, 10b, and 10c****.** The inlet manifold 108 can distribute the thermal-regulating liquid transverse to the top flow direction 102 from dispensing points 110 that are located at the first side 26 of the casing 12. Similarly, the conduit 96 has an outlet manifold 112 formed by the middle section 16 of the casing 12 that fluidly couples the outlet 94 and the bottom conduit section 100, see **Figs. 10a, 10b, and 10d****.** The outlet manifold 112 can collect the thermal-regulating liquid transverse to the bottom flow direction 104 via collecting points 114 that are located at the first side 26 of the casing 12.

The middle section 16 forms a top reinforcement structure 116 that is connected to the battery-cell support 82 and extends between the battery-cell support 82 and the top section 14, between the first side 26 and the second side 28 of the casing 12, and between the third side 30 and the fourth side 32 of the casing 12, see for example **Figs. 3a****,** **4a and 4b****.** The top reinforcement structure 116 is a partially hollowed-out structure and extends through the top conduit section 98. This way, it allows the thermal-regulating liquid to pass through the top reinforcement structure 116.

Similarly, the middle section 16 forms a bottom reinforcement structure 118 that is connected to the battery-cell support 82 and extends between the battery-cell support 82 and the bottom section 18, between the first side 26 and the second side 28 of the casing 12, and between the third side 30 and the fourth side 32 of the casing 12, see for example **Figs. 3b** **and** **5****.** The bottom reinforcement structure 118 is a partially hollowed-out structure and extends through the bottom conduit section 100. This way, it allows the thermal-regulating liquid to pass through the bottom reinforcement structure 118.

The top reinforcement structure 116 has top connectors 120 that are connected to the battery-cell support 82 extends from the battery-cell support 82 to the top section 14, see for example **Figs. 2a****,** **4a, and 4b****.** The battery module 10 has additional top contact seams (not shown), and each additional top contact seam (not shown) attaches the top section 14 to a top connector 120. Each additional top contact seam (not shown) is of the same cured photopolymer material as the top section 14 and middle section 16 and forms polymer cross-links with the photopolymer material of the top connectors 120 and the top section 14.

Similarly, the bottom reinforcement structure 118 has bottom connectors 122 that are connected to the battery-cell support 82 extends from the battery-cell support 82 to the to the bottom section 18, see for example **Figs. 2b** **and** **5****.** The battery module 10 has additional bottom contact seams (not shown), and each additional bottom contact seam (not shown) attaches the bottom section 18 a bottom connector 122. Each additional bottom contact seam (not shown) is of the same cured photopolymer material as the bottom section 18 and middle section 16 and forms polymer cross-links with the photopolymer material of the bottom connectors 120 and the bottom section 18.

The top connectors 120 are spaced apart from each other and from the first side 26, second side 28, third side 30, and fourth side 32 of the casing 12. This way, the additional top contact seams (not shown) are spaced apart from each other and from the first side 26, second side 28, third side 30, and fourth side 32 of the casing 12. Similarly, the bottom connectors 122 are spaced apart from each other and from the first side 26, second side 28, third side 30, and fourth side 32 of the casing 12. This way, the additional bottom contact seams (not shown) are spaced apart from each other and from the first side 26, second side 28, third side 30, and fourth side 32 of the casing 12. Each of the top connectors 120 and the bottom connectors 122 have a cross-section outlining a portion of a smooth monotonic curve that is aligned with the top flow direction 102 at its endpoints.

The top section 14 forms top depressions 124, see **Fig. 12b****,** and a single top connector 120 extends through the top conduit section 98 and into each top depression 124. An additional top contact seam (not shown) is located in each top depression 124 and connects the top section 14 to the middle section 16 within the top depression 124. The geometry at the top of each top connector 120 matches the geometry of the top depression 124 it extends into. Similarly, the bottom section 18 forms bottom depressions (not shown), and a single bottom connector 122 extends through the bottom conduit section 100 into each top depressions (not shown) similar to how a top connector 120 extends and into each top depression 124. An additional bottom contact seam (not shown) is located in each bottom depression (not shown) and connects the bottom section 18 to the middle section 16 within the bottom depression (not shown). The geometry at the top of each bottom connector 122 relative to the battery-cell support 82 matches the geometry of the top depression (not shown) it extends into.

The top reinforcement structure 116 forms a top intermediate support 128 that is located within the top conduit section 98 and extends from the first side 26 to the second side 28 of the casing 12, and from the third side 30 to the fourth side 32 of the casing 12, see for example Figs. 4a, 4b, 7a, 7b, 8a, and 8b. It is located between the battery-cell support 82 and the top section 14 and spaced apart from the battery-cell support 82. The top intermediate support 128 is located closer to the top section 14 than to the battery-cell support 82 and outlines a planar geometry. It is connected to the battery cell 24 support via the top connectors 120 and to the top section 14 via the top connectors 120 and the additional top contact seams (not shown). Similarly, the bottom reinforcement structure 118 forms a bottom intermediate support 130 that is located within the bottom conduit section 100 and extends from the first side 26 to the second side 28 of the casing 12, and from the third side 30 to the fourth side 32 of the casing 12 see for example Figs. 5, 7a, 7b, 8a, and 8b. It is located between the battery-cell support 82 and the bottom section 18 and spaced apart from the battery-cell support 82. The bottom intermediate support 130 is located closer to the bottom section 18 than to the battery-cell support 82 and outlines a planar geometry. It is connected to the battery cell 24 support via the bottom connectors 122 and to the bottom section 18 via the bottom connectors 122 and the additional bottom contact seams (not shown). This way, the thermal-regulating fluid can pass between the top intermediate support 128 and the battery-cell support 82 and between the bottom intermediate support 130 and the battery-cell support 82. The top intermediate support 128 is located at and spaced apart from the top section 14, and the bottom intermediate support 130 is located at and spaced apart from the bottom section 18. This way, the thermal-regulating fluid can pass between the top section 14 and the top intermediate support 128 and between the bottom section 18 and the bottom intermediate support 130.

The top intermediate support 128 forms a honeycomb structure that has hexagonal top through holes 136 that extend transverse to the top side 34 of the casing 12, see **Figs. 4a and 4b****,** and a battery cell 24 extends into each top through hole 136. The top through holes 136 are arranged in packing that matches the triangular/hexagonal packing of the through holes 88 of the battery-cell support 82. For each battery cell 24, the top intermediate support 128 engages the battery cell 24 at six separate locations. This way, the top intermediate support 128 defines six top liquid passages 132 between the battery cell 24 and the top intermediate support 128, and the top intermediate support 128 fixes each battery cell 24 in a top interference fit that is weaker than the interference fit of the battery-cell support 82. In an alternative embodiment, there is a top clearance between the top intermediate support 128 and each battery cell 24. Similarly, the bottom intermediate support 130 forms a honeycomb structure that has hexagonal bottom through holes 138 that extend transverse to the bottom side 36 of the casing 12, see **Fig. 5****,** and a battery cell 24 extends into each bottom through hole 138. The bottom through holes 138 are arranged in packing that matches the triangular/hexagonal packing of the through holes 88 of the battery-cell support 82. For each battery cell 24, the bottom intermediate support 130 engages the battery cell 24 at six separate locations. This way, the bottom intermediate support 130 defines six bottom liquid passages 134 between the battery cell 24 and the bottom intermediate support 130, and the bottom intermediate support 130 fixes each battery cell 24 in a bottom interference fit that is weaker than the interference fit of the battery-cell support 82. In an alternative embodiment, there is a bottom clearance between the bottom intermediate support 130 and each battery cell 24.

The top busbars 66 rest on and are supported by the top intermediate support 128. The top busbars 66 are located between the top intermediate support 128 and the top section 14. Similarly, the bottom busbars 68 rest on and are supported by the bottom intermediate support 130. The bottom busbars 68 are located between the bottom intermediate support 130 and the bottom section 18.

Each top busbars 66 forms top busbar apertures 140. The top reinforcement structure 116 forms top busbar protrusions 142 that extends towards the top section 14 through the top busbar apertures 140 of the top busbars 66 and contact the top section 14, see for example **Figs. 2a****,** **4a, and 4b****.** The top busbar protrusions 142 engage the top busbars 66 within the top busbar apertures 140. Similarly, each bottom busbars 68 forms bottom busbar apertures 144. The bottom reinforcement structure 118 forms bottom busbar protrusions 146 that extends towards the bottom section 18 through the bottom busbar apertures 144 of the bottom busbars 68 and contact the bottom section 18, see **Figs. 2b** **and** **5****.** The bottom busbar protrusions 146 engage the bottom busbars 68 within the bottom busbar apertures 144.

The top section 14 forms top busbar spacers 148 that extend towards the top busbars 66 and the top intermediate support 128, see **Figs. 7a****,** **8a****,** **8b****, and** **12b****.** Each top busbar spacer 148 contacts a top busbar 66 and is centered on a battery cell 24. The top busbar spacers 148 are located within the top conduit section 98 and allow the thermal-regulating liquid to pass between them and between the top busbars 66 and the top section 14. Similarly, the bottom section 18 forms bottom busbar spacers 150 that extend towards the bottom busbars 68 and the bottom intermediate support 130, see **Fig. 7a****,** **8a, and 8b****.** Each bottom busbar spacer 150 contacts a bottom busbar 68 and is centered on a battery cell 24. The bottom busbar spacers 150 are located within the bottom conduit section 100 and allow the thermal-regulating liquid to pass between them and between the bottom busbars 68 and the bottom section 18.

The bottom intermediate support 130 forms battery rests 152, see for example **Figs. 5** and 7a. Each battery rest 152 engages the bottom end 52 of a battery cell 24 at the edge of the bottom end 52 and at one side of the battery cell 24. The battery rest 152 is spaced apart from the bottom electrical terminal 62 of the battery cell 24. This way, each battery rest 152 defines a nominal position of a battery cell 24 relative to the battery-cell support 82.

A method 200 of manufacturing the battery module of **Figs. 1a and 1b** is schematically outlined in **Fig. 13****.** The top section 14 is formed 202 from a precursor photopolymer material as a monolithic structure by additive manufacturing in the form of stereolithography. The top section 14 is formed with the top busbar spacers 148 that contact the top busbars 66. This way, the top busbar spacers 148 form part of the monolithic structure of the top section 14. The top section 14 is further formed with the top groove 40 and the top depressions 124.

The middle section 16 is formed 204 from a precursor photopolymer material as a monolithic structure by additive manufacturing in the form of stereolithography. The precursor photopolymer material is the same as for the top section 14. The middle section 16 is formed separate from the top section 14 and is arranged to support the battery cells 24. The middle section 16 is formed with the battery-cell support 82 that can support the battery cells 24, the inlet 92 and outlet 94 for the thermal-regulating liquid, the top reinforcement structure 16 that is connected to the battery-cell support 82 and extends between the battery-cell support 82 and the top section 14, the bottom reinforcement structure 118 that is connected to the battery-cell support 82 and extends between the battery-cell support 82 and the bottom section 18, the top connectors 120, the bottom connectors 122, the top intermediate support 128 that is located between the battery-cell support 82 and the top section 14, the bottom intermediate support 130 that is located between the battery-cell support 82 and the bottom section 18. This way, the listed structural features form part of the monolithic structure of the middle section 16. The middle section 16 is formed to partly define the conduit 96 for the thermal-regulating liquid, the top reinforcement structure 116 that is connected to the battery-cell support 82 and extends between the battery-cell support 82 and the top section 14. The middle section 16 is further formed with the top ridge 38, bottom ridge 42, top spacers 46, and bottom spacers 48. The battery-cell support 82 is formed with the through holes 88 having the sensor cut-outs 158.

The bottom section 18 is formed 206 from a precursor photopolymer material as a monolithic structure by additive manufacturing in the form of stereolithography. The precursor photopolymer material is the same as for the top section 14 and the middle section 18. The bottom section 18 is formed with the bottom busbar spacers 150 that contact the bottom busbars 68. This way, the bottom busbar spacers 150 form part of the monolithic structure of the bottom section 18. The bottom section 18 is further formed with bottom groove 44 and the bottom depressions (not shown).

Each of the top section 14 and the bottom section 18 has a mounting position relative to the middle section 16 in which the top section 14, middle section 16, and the bottom section 18 are arranged to jointly enclose the battery cells 24, as shown in **Figs. 1a and 1b****.**

The sensors 154 and the sensor connectors 156 are positioned in the sensor cut-outs 158. The battery cells 24 are arranged 208 in the middle section 16 with the middle section 16 supporting the battery cells 24. More precisely, the plurality of battery cells 24 are arranged in the battery-cell support 82 with the battery-cell support 82 supporting the battery cells 24, and the battery cells 24 are operationally connected with the busbars 66 and 68.

A top contact-seam precursor (not shown) in the form of a liquid precursor photopolymer material is applied 210 in the top groove 40 formed by the top section 14, and additional top contact-seam precursors (not shown) of the same precursor photopolymer material is applied in the top depressions 124 formed by the top section 14. The precursor photopolymer material is the same as for the top section 14 and the middle section 16. The top section 14 is positioned in its mounting position relative to the middle section 16 with the top ridge 38 in the top groove 40 and the top connectors 120 extending into the top depressions 124. The top contact-seam precursor (not shown) and the additional top contact precursors (not shown) are cured by subjecting them to light from outside the top section 14 and the middle section 16. This way, the top contact seam 20 and the additional top contact seams (not shown) that attaches the top section 14 to the middle section 16 are formed.

A bottom contact-seam precursor (not shown) in the form of a liquid precursor photopolymer material is applied 212 in the bottom groove 44 formed by the bottom section 18, and additional bottom contact-seam precursors (not shown) of the same precursor photopolymer material is applied in the bottom depressions (not shown) formed by the bottom section 18. The precursor photopolymer material is the same as for the bottom section 18 and the middle section 16. The bottom section 18 is positioned in its mounting position relative to the middle section 16 with the bottom ridge 42 in the bottom groove 44 and the bottom connectors 124 extending into the bottom depressions (not shown). The bottom contact-seam precursor (not shown) and the additional bottom contact-seam precursors (not shown) are cured by subjecting them to light from outside the bottom section 18 and the middle section 16. This way, the bottom contact seam 22 and the additional bottom contact seams (not shown) that attaches the bottom section 18 to the middle section 16 are formed.

After forming the top section 14, middle section 16, and bottom section 18, the photopolymer material of the top section 14, middle section 16, and bottom section 18 is in a semi-cured state. This allows for polymer cross-links to form between the seams and the adjoining structures.

After the casing 12 has been assembled, the photopolymer material of the casing 12 formed by the top section 14, middle section 16, bottom section 18, top contact seam 20, bottom contact seam 22, additional top contact seams 20, and additional bottom contact seams 22 is in a semi-cured state. The semi-cured photopolymer material is to some degree translucent to light that can further cure the photopolymer material. The casing 12 is then post cured 214 by subjecting it to light from a lamp (not shown) having spectral properties intended to cure the photopolymer material. In an alternative embodiment, the casing 12 is simultaneously exposed to heat in an oven.

An alternative embodiment of a battery module is shown in Figs. 14 and 15. It shares the features of the embodiment of Fig. 1 but differs in that the wall 160 of each through hole 88 is spaced apart from and has a clearance to the battery cell 24 in the through hole 88. This means that the wall section 162 between each pair neighboring through holes 88 is spaced apart from and has a clearance to the battery cells 24 in the through holes 88. The battery-cell support 82 forms a plurality of protrusions 164 in each through hole 88 that are connected to and extends from the wall 160 of the through hole 88, and from the wall sections 162 between the through hole 88 and neighboring through holes 88. The protrusions 164 contacts and support the battery cell 24 positioned in each through hole 88. The wall 160 and the wall sections 162 bias the protrusions 164 against the battery cell 24. This way, the protrusions 164 fix each battery cell 24 in an interference fit. For each pair of neighboring through holes 88, the battery cells 24 in the through holes 88 bias the protrusions and deforms the wall section 162 between the through holes 88. The deformations are primarily at the protrusions 164.

The protrusions 164 in a through hole are located at different positions along the through hole 88 and relative to top section 14 and bottom section 18 than in the neighboring through holes 88, which can be seen in **Fig. 15****.** In each through hole 88, the protrusions 164 are located at four separate planes that are transverse to the through hole 88, and the separate planes are and spaced apart along the through hole 88. In other embodiments the number of separate planes is different, for example, two or three. In each through hole 88, there is a single protrusion 164 at each plane. In other embodiments, there are several protrusions 164 at each plane.

The separate planes of the protrusions 164 of each through hole are non-overlapping with the separate planes of the protrusions 164 of neighboring through holes 88. This means that the protrusions 164 in each through hole are located at separate levels, and that the protrusions 164 of a through hole 88 are spaced apart from the separate levels of the protrusions 164 of the neighboring through holes 88 in a direction along the through hole 88. The separate levels of the protrusions 164 in each through hole 88 are spaced apart from the corresponding separate levels in the neighboring through holes 88 by at least 5% of the length of the through hole 88.

The protrusions 164 are ridges that are tangential to the through holes 88. In each through hole 88, two protrusion 164 are annular and outline a complete circle. These protrusions 164 form seal that can prevent a thermal-regulating liquid from passing between the battery cell 24 and the wall 162 of the through hole 88 formed by the battery-cell support 82. Two protrusions 88 are partly annular and outline a major arc of circle. These protrusions 164 terminate at the sensor cut-outs 158.

Each through hole 88 has a top opening 166 and a bottom opening 168. In each through hole 88, a protrusion 164 is located closer to the top opening 166 than to the center between the top opening 166 and the bottom opening 168, and a protrusion 164 is located closer to the bottom opening 168 than to the center between the top opening 166 and the bottom opening 168.

### ITEM LIST

10 battery module
12 casing
14 top section
16 middle section
18 bottom section
20 top contact seam
22 bottom contact seam
24 battery cells
26 first side of casing
28 second side of casing
30 third side of casing
32 fourth side of casing
34 top side of casing
36 bottom side of casing
38 top ridge
40 top groove
42 bottom ridge
44 bottom groove
46 top spacers
48 bottom spacers
50 top end of battery cell
52 bottom end of battery cell
54 top end section of battery cell
56 midsection of battery cell
58 bottom end section of battery cell
60 top electric terminal of battery cell
62 bottom electrical terminal of battery cell
64 battery group
66 top busbar
68 bottom busbar
70 first battery-module terminal
72 second battery-module terminal
74 battery-module control unit
76 circuit arrangement
78 access aperture
80 access seal
82 battery-cell support
84 row of battery cells
86 column of battery groups
88 through hole
90 gap between neighboring battery cells
92 inlet
94 outlet
96 conduit
98 top conduit section
100 bottom conduit section
102 top flow direction
104 bottom flow direction
106 channel
108 inlet manifold
110 dispensing points
112 outlet manifold
114 collecting points
116 top reinforcement structure
118 bottom reinforcement structure
120 top connector
122 bottom connector
124 top depression
128 top intermediate support
130 bottom intermediate support
132 top liquid passage
134 bottom liquid passage
136 top through holes
138 bottom through holes
140 top busbar aperture
142 top busbar protrusion
144 bottom busbar aperture
146 bottom busbar protrusion
148 top busbar spacer
150 bottom busbar spacer
152 battery rest
154 sensor
156 sensor connectors
158 sensor cut-outs
160 wall
162 wall section
164 protrusion
166 top opening of through hole
168 bottom opening of through hole

## Claims

1. A battery module (10) that comprises:
- a top section (14),
- a middle section (16),
- a bottom section (18),
- a top contact seam (20),
- a bottom contact seam (22), and
- a plurality of battery cells (24),
wherein the top contact seam (20) attaches the top section (14) to the middle section (16),
the bottom contact seam (22) attaches the bottom section (18) to the middle section (16),
the middle section (16) supports, or holds, the plurality of battery cells (24),
the top section (14), the middle section (16), and the bottom section (18) jointly enclose the battery cells (24).

2. The battery module (10) according to claim 1, wherein the top contact seam (20) and bottom contact seam (22) are annular, and the top section (14), middle section (16), bottom section (18), top contact seam (20), and bottom contact seam (22) jointly form a monolithic structure.

3. The battery module (10) according to claim 1 or 2, wherein each of the top section (14), middle section (16), bottom section (18), top contact seam (20), and bottom contact seam (22) is of a cured photopolymer material, the photopolymer material of the top contact seam (20) forms polymer cross-links with the photopolymer material of the middle section (16) and with the polymer material of the top section (14), and the photopolymer material of the bottom contact seam (22) forms polymer cross-links with the photopolymer material of the middle section (16) and with the photopolymer material of the bottom section (18).

4. The battery module (10) according to any of the claims 1 to 3, wherein the middle section (16) forms a battery-cell support (82) that supports the battery cells (24), the battery-cell support (82) positions the battery cells (24) in parallel rows (84) and in a in a triangular or hexagonal packing, the battery-cell support (82) forms a plurality of through holes and a battery cell (24) is positioned in each through hole, and the battery-cell support (82) spaces each pair of neighboring battery cells (24) apart.

5. The battery module (10) according to claim 4, wherein the top section (14), middle section (16), bottom section (18), top contact seam (20), bottom contact seam (22) jointly forms a casing (12) of the battery module (10), the middle section (16) forms an inlet (92) and an outlet (94) for a thermal-regulating liquid, the casing (12) forms a conduit (96) that is arranged to lead the thermal-regulating liquid from the inlet (92) to the outlet (94), the conduit (96) has a top conduit section (98) and a bottom conduit section (100), each battery cell (24) extends into the top conduit section (98) and the bottom conduit section (100), the top conduit section (98) is arranged to conduct the thermal-regulating liquid in a top flow direction (102) and the bottom conduit section (100) is arranged to conduct the thermal-regulating liquid in a bottom flow direction (104) that is opposite to the top flow direction (102), the top conduit section (98) is located between the battery-cell support (82) and the top section (14), the bottom conduit section (100) is located between the battery-cell support (82) and the bottom section (18) of the casing (12), and the battery-cell support (82) and the battery cells (24) jointly separate the top conduit section (98) and the bottom conduit section (100).

6. The battery module (10) according to 5, wherein the middle section (16) forms a top reinforcement structure (116) that is connected to the battery-cell support (82) and extends between the battery-cell support (82) and the top section (14), the top reinforcement structure (116) is a partially hollowed-out structure, the top reinforcement structure (116) extends into the top conduit section (98), the middle section (16) defines a first side (26) and an opposite second side (28) of the casing (12), the middle section (16) defines a third side (30) and an opposite fourth side (32) of the casing (12), the third side (30) and the fourth side (32) extend between the first side (26) and the second side (28), and the top reinforcement structure (116) extends between the first side (26) and the second side (28) of the casing (12), and between the third side (30) and the fourth side (32) of the casing (12).

7. The battery module (10) according to claim 6, wherein the top reinforcement structure (116) has a plurality of top connectors (120), wherein each top connector (120) extends to the top section (14), and the battery module (10) comprises:
- a plurality of additional top contact seams,
wherein each additional top contact seam attaches the top section (14) to a top connector (120) of the plurality of top connectors (120).

8. The battery module (10) according to claim 6 or 7, wherein the top reinforcement structure (116) has a top intermediate support (128) that is located between the battery-cell support (82) and the top section (14) and is spaced apart from the battery-cell support (82), the top intermediate support (128) is connected to the battery-cell support (82) via the top connectors (120), and the top intermediate support (128) extend from the first side (26) to the second side (28) of the casing (12), and from the third side (30) to the fourth side (32) of the casing (12).

9. The battery module (10) according to claim 4, wherein the battery-cell support (82) forms a wall section (162) between each pair neighboring through holes (88) that is spaced apart from the battery cell (24) positioned in respective through hole (88), the battery-cell support (82) forms a plurality of protrusions (164) within each through hole (88) that support the battery cell (24) positioned in the through hole (88), wherein, for each pair of neighboring through holes (88), the protrusions (164 are connected to and extend from the wall section (162) between the through holes (88), and the wall section (162) biases the protrusions (164) against the battery cell (24) positioned in respective through hole (88).

10. The battery module (10) according to any of the claims 1 to 9, wherein the battery module (10) comprises a plurality of busbars (66, 68) that operationally connect the battery cells (24), the busbars (66, 68) comprise a first set of top busbars (66) that are located at the top section (14) and a second set of bottom busbars (68) that are located at the bottom section (18), the top section (14) forms a plurality of top busbar spacers (148), and each top busbar spacer (148) contacts a top busbar (68).

11. A method for manufacturing a battery module (10), wherein the comprises:
- forming a top section (14),
- forming a middle section (16) separate from the top section (14), wherein the middle section (16) is arranged to support, or hold, a plurality of battery cells (24), and
- forming a bottom section (18) separate from the top section (14) and the middle section (16),
wherein each of the top section (14) and the bottom section (18) has a mounting position relative to the middle section (16) in which the top section (14), middle section (16), and the bottom section (18) are arranged to jointly enclose the battery cells (24),
- arranging a plurality of battery cells (24) in the middle section (16) with the middle section (16) supporting the battery cells (24),
- applying a top contact-seam precursor to the top section (14) and/or the middle section (16), arranging the top section (14) in its mounting position, and hardening, or curing, the top contact-seam precursor to form the top contact seam (20) that attaches the top section (14) to the middle section (16), and
- applying a bottom contact-seam precursor to the bottom section (18) and/or the middle section (16), arranging the bottom section (18) in its mounting position, and hardening, or curing, the bottom contact-seam precursor to form the bottom contact seam (22) that attaches the bottom section (18) to the middle section (16).

12. The method according to claim 11, wherein the top contact-seam precursor and bottom contact-seam precursor are annular, and forming the top section (14) comprises:
- forming the top section (14) as a monolithic structure,
forming the middle section (16) comprises:
- forming the middle section (16) as a monolithic structure,
forming the bottom section (18) comprises:
- forming the bottom section (18) as a monolithic structure, and
subsequent to hardening the top contact-seam precursor and the bottom contact-seam precursor, the top section (14), middle section (16), bottom section (18), top contact seam (20), and bottom contact seam (22) jointly form a monolithic structure, or unitary structure.

13. The method according to claim 11 or 12, wherein each of the top section (14), middle section (16), bottom section (18), top contact seam (20), and bottom contact seam (22) is of a cured photopolymer material, the top contact-seam precursor is of a precursor photopolymer material, and hardening the top contact-seam precursor comprises:
- subjecting the top contact-seam precursor to light, and
the bottom contact-seam precursor is of a precursor photopolymer material, and hardening the bottom contact-seam precursor comprises:
- subjecting the bottom contact-seam precursor to light.

14. The method according to any of the claim 13, wherein the photopolymer material of each of the top section (14), middle section (16), bottom section (18), top contact seam (20), and bottom contact seam (22) is semi-cured, and the comprises:
- post-curing the top section (14), middle section (16), bottom section (18), top contact seam (20), and bottom contact seam (22) by subjecting them to light.

15. The method according to any of the claims 11 to 13, wherein forming the middle section (16) comprises:
- forming the middle section (16) with a plurality of top connectors (120), wherein each top connector (120) is arranged to extend to the top section (14), and the method further comprises prior to arranging the top section (14) in its mounting position:
- applying an additional top contact-seam precursor to each top connectors (120), wherein the top contact-seam precursors are arranged to contact the top section (14),
and the method further comprises subsequent to arranging the top section (14) in its mounting position:
- curing the additional top contact-seam precursors to form additional top contact seams that attach the top section (14) to the top connectors (120).
